# EUROPÄISCHE PATENTSCHRIFT

(11) **EP 2 948 239 B1**
(45) Veröffentlichungstag und Bekanntmachung des Hinweises auf die Patenterteilung: **18.10.2017**
(21) Anmeldenummer: 14701533.3
(22) Anmeldetag: 27.01.2014
(51) Int. Cl.: C04B 40/00, C04B 14/04, C04B 24/16, C04B 24/26, C04B 103/14, C04B 103/52

(54) **ADDITIV FÜR HYDRAULISCH ABBINDENDE MASSEN**
ADDITIVE FOR HYDRAULICALLY SETTING MASSES
ADDITIF POUR MASSES À PRISE HYDRAULIQUE

(30) Priorität: 25.01.2013 EP 13152684; 25.01.2013 US 201361756488 P
(43) Veröffentlichungstag der Anmeldung: 02.12.2015
(73) Patentinhaber: BASF SE, 67056 Ludwigshafen am Rhein (DE)
(72) Erfinder: HESSE, Christoph, 85560 Ebersberg (DE); BICHLER, Manfred, 84549 Engelsberg (DE); KRAUS, Alexander, 83132 Pittenhart (DE); NICOLEAU, Luc, 67063 Ludwigshaffen am Rhein (DE); GÄDT, Torben, 83278 Traunstein (DE); WINKLBAUER, Martin, 84553 Halsbach (DE)
(86) Internationale Anmeldenummer: PCT/EP2014/051494
(87) Internationale Veröffentlichungsnummer: WO 2014/114784

(56) Entgegenhaltungen:
- WO-A1-2010/026155
- WO-A1-2011/131378
- WO-A1-2011/131904
- WO-A1-2012/025567
- WO-A1-2013/083627
- POLLMAN ET AL: "Hydration characteristics and new hydrates using organic additives (carboxylates and sulfonates)", PROCEEDINGS OF THE INTERNATIONAL CONGRESS ON THE CHEMISTRY OF CEMENT : GOTHENBURG, SWEDEN, JUNE 2 - 6, 1997,, Bd. 3, 1. Januar 1997 (1997-01-01), Seite 8pp, XP008163300, ISBN: 91-630-5497-3

## Beschreibung

Die vorliegende Erfindung betrifft ein Additiv für hydraulisch abbindende Massen, ein Verfahren zur Herstellung des Additivs und die Verwendung des Additivs.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d.h. Knetbarkeit, Streichfähigkeit, Spritzbarkeit, Pumpbarkeit oder Fließfähigkeit, oft Additive zusetzt. Manche Additive, die sog. Härtungsbeschleuniger enthalten, sind in der Lage, den Härtungsprozess zu verkürzen. Diese Eigenschaft wird insbesondere auch gezielt bei der Herstellung von Baustoffmischungen, die hydraulische Bindemittel, wie Zement, Kalk, Gips, Calciumsulfat-Hemihydrat (Bassanit) oder wasserfreies Calciumsulfat (Anhydrit), oder latent hydraulische Bindemittel wie Flugasche, Hochofenschlacke oder Puzzolane enthalten, ausgenutzt.

Gemäß der WO 02/070425 kann Calciumsilikathydrat (C-S-H), insbesondere dispergiert (fein oder besonders fein dispergiert) vorliegend, als Härtungsbeschleuniger eingesetzt werden. Die WO 2010/026155 offenbart eine Zusammensetzung, die ein als Fließmittel für hydraulische Bindemittel geeignetes wasserlösliches Kammpolymer, sowie Calciumsilikathydratpartikel mit einem Teilchendurchmesser < 500 nm umfasst. Als Calciumquelle für die Herstellung der C-S-H-Partikel werden nach dem Stand der Technik u. a. Calciumformiat, Calciumchlorid, Calciumnitrat, Calciumacetat und Calciumsulfat verwendet.

Die WO 2012/025567 beschreibt ein Verfahren zur Herstellung eines Abbinde- und Erhärtungsbeschleunigers für hydraulische Bindemittel durch Umsetzung einer Calciumverbindung, bei der es sich unter anderem um Calciumsulfamat handeln kann, mit einer Siliciumverbindung unter Zugabe eines Phosphonsäurederivats, das eine Polyalkylenoxidkette umfasst. Das Phosphonsäurederivat wird hergestellt durch Veresterung oder Amidierung einer Phosphonsäureverbindung mit einer Polyalkylenoxidverbindung oder mehreren Polyalkylenoxidverbindungen. Es weist demnach eine endständige Phosphonsäuregruppe auf. Es handelt sich somit nicht um ein polymeres Dispergiermittel, das aus Struktureinheiten mit anionischen oder anionogenen Gruppen und Struktureinheiten mit Polyetherseitenketten aufgebaut ist.

Die WO 2013/083627 beschreibt ein Verfahren zur Herstellung eines Abbinde- und Erhärtungsbeschleunigers für mineralische Bindemittel, das die Schritte der Umsetzung einer Calciumverbindung mit einer Siliciumverbindung und die Zugabe einer sauren Verbindung mit einem Molekulargewicht von höchstens 200 g/mol umfasst. Dabei werden ein Überschuss der sauren Verbindung und stets ein weiterer Härtungsbeschleuniger, nämlich Methyldiethanolamin, zu einer Lösung der Calciumverbindung gegeben. Das Gemisch wird dann mit einer Lösung der Siliciumverbindung ohne Verwendung eines Dispergiermittels vermischt.

Die bekannten Härtungsbeschleuniger besitzen vor allem auf Grund der in dem Produkt verbleibenden Anionen eine Reihe von Nachteilen. Calciumsilikathydrat-basierte Härtungsbeschleuniger, die unter Verwendung der genannten Calciumverbindungen als Calciumquelle hergestellt wurden, verlieren durch Trocknung einen erheblichen Teil ihrer Aktivität. Dies gilt insbesondere bei Verwendung von Calciumformiat. Die Verwendung von Calciumchlorid ergibt korrosiv wirkende Mischungen. Der Einsatz von Calciumnitrat mit organischen Substanzen, wie z. B. anderen Additiven für hydraulisch abbindende Massen, ist auf Grund der oxidierend wirkenden Nitrationen bedenklich. Produkte auf Basis von Calciumacetat sind hygroskopisch. Calciumsulfat wiederum kann Löslichkeitsprobleme mit sich bringen. Die Wirkung des nach dem in der WO 2013/083627 beschriebenen Verfahren erhaltenen Härtungsbeschleunigers ist im Bereich bis zu ca. 6 Stunden unzureichend. Insbesondere wird es kaum möglich sein, Betonformkörper frühzeitig zu entschalen und damit die Produktionszyklen zu beschleunigen.

Die verschiedenen Härtungsbeschleuniger können wegen der genannten Nachteile jeweils nur unter bestimmten Bedingungen eingesetzt werden. Da Wasser auch in geringen Mengen für trockene Bindemittel, insbesondere Zement, nachteilig ist, können die als Suspensionen vorliegenden, Calciumsilikathydrat-basierten Härtungsbeschleuniger nicht als Additiv für trockene Bindemittel eingesetzt werden. Außerdem sind chloridhaltige Betonzusatzmittel für viele Anwendungen verboten.

Der vorliegenden Erfindung liegt daher die Aufgabe zugrunde, ein Additiv für hydraulisch abbindende Massen bereitzustellen, das als Härtungsbeschleuniger wirkt, insbesondere zur Steigerung der Frühfestigkeiten, wobei unter Frühfestigkeit bevorzugt die Druckfestigkeit nach 24 Stunden, insbesondere bevorzugt die Druckfestigkeit nach 10 Stunden und am meisten bevorzugt die Druckfestigkeit nach 6 Stunden verstanden werden soll.

Ferner liegt der vorliegenden Erfindung die Aufgabe zu Grunde, ein Additiv in Form eines Trockenprodukts, insbesondere eines Pulvers, für hydraulisch abbindende Massen bereitzustellen, das als Härtungsbeschleuniger wirkt und trockenen hydraulischen Bindemitteln zugesetzt werden kann. Insbesondere liegt der vorliegenden Erfindung die Aufgabe zu Grunde, ein universell einsetzbares Additiv für hydraulisch abbindende Massen in Form eines Trockenprodukts, insbesondere eines Pulvers, bereitzustellen, dessen Wirkung auch in trockenem Zustand im Wesentlichen mit der Wirkung der Suspension vergleichbar ist.

Diese Aufgaben werden gelöst durch ein Additiv für hydraulisch abbindende Massen, umfassend ein Dispergiermittel, zumindest eine nicht polymere Sulfonsäureverbindung und Calciumsilikathydratpartikel.

Gemäß einer Ausführungsform der Erfindung ist der durch dynamische Lichtstreuung (Malvern Zetasizer NanoZS) der erfindungsgemäßen Suspension bestimmte Partikeldurchmesser von 90 % der Calciumsilikathydratpartikel kleiner als 1000 nm, bevorzugt kleiner als 500 nm, weiterhin bevorzugt kleiner als 300 nm und besonders bevorzugt kleiner als 200 nm.

Mit Sulfonsäureverbindung sind all diejenigen Verbindungen bezeichnet, die eine Struktureinheit -SO₃- aufweisen, in der alle drei Sauerstoffatome direkt mit dem Schwefelatom verknüpft sind. Insbesondere ist der Begriff Sulfonsäureverbindung nicht beschränkt auf Sulfonsäuren und umfasst auch die Salze davon, die Sulfonsäureanionen enthalten.

Die Sulfonsäureverbindung ist insbesondere eine Verbindung der Formel (I) 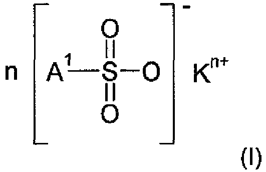 worin
A¹ für NH₂, NHMe, NMe₂, N(CH₂-CH₂-OH)₂ CH₃, C₂H₅, CH₂-CH₂-OH, Phenyl oder p-CH₃-Phenyl, steht und
Kⁿ⁺ für ein Alkalimetallkation, insbesondere Na⁺, K⁺, oder ein Äquivalent eines Kations steht, das ausgewählt ist unter Ca²⁺, Mg²⁺, Sr²⁺, Ba²⁺, Zn²⁺, Fe²⁺, Fe³⁺, Al³⁺, Mn²⁺, und/oder Cu²⁺.
In einer besonders bevorzugten Ausführungsform ist das Anion der Formel (I) ausgewählt unter Amidosulfonat (H₂N-SO₃⁻) und Methylsulfonat (H₃C-SO₃⁻). Insbesondere bevorzugt ist das Anion der Formel (I), das Amidosulfonat (H₂N-SO₃⁻). Das Dispergiermittel umfasst zumindest ein Polymer, das Struktureinheiten mit anionischen und/oder anionogenen Gruppen und Struktureinheiten mit Polyetherseitenketten umfasst; die Struktureinheiten sind in Anspruch 1 definiert. Insbesondere können Polymere eingesetzt werden, die an einer linearen Hauptkette in mehr oder weniger regelmäßigen Abständen längere Seitenketten (mit einem Molekulargewicht von jeweils mindestens 200 g/mol, besonders bevorzugt mindestens 400 g/mol) aufweisen. Die Längen dieser Seitenketten sind häufig etwa gleich, können jedoch auch stark voneinander abweichen (z.B. dann, wenn Polyethermakromonomere mit unterschiedlich langen Seitenketten einpolymerisiert werden). Derartige Polymere sind beispielsweise durch radikalische Polymerisation von Säuremonomeren und Polyethermakromonomeren erhältlich. Ein alternativer Weg zu derartigen Karnmpolymeren ist die Veresterung und/oder Amidierung von Poly(meth)acrylsäure und ähnlichen (Co)polymeren, wie beispielsweise Acrylsäure/Maleinsäure-Copolymeren, mit geeigneten monohydroxyfunktionellen bzw. monoaminofunktionellen Polyalkylenglykolen, vorzugsweise Alkylpolyethylenglykolen. Durch Veresterung und/oder Amidierung von Poly(meth)acrylsäure erhältliche Kammpolymere werden beispielsweise in der EP 1138697B1 beschrieben, auf die hiermit ausdrücklich Bezug genommen wird.

Das durch Gelpermeationschromatographie (GPC) bestimmte mittlere Molekulargewicht M_{w} des Polymers beträgt vorzugsweise 5,000 bis 200,000 g/mol, besonders bevorzugt 10,000 bis 80,000 g/mol, und ganz besonders bevorzugt 20,000 bis 70,000 g/mol. Das mittlere Molekulargewicht der Polymere und Umsatz wurden mittels GPC analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von HCO₂NH₄ (0,05 mol/l) und 20 Vol.% Acetonitril; Injektionsvolumen 100 µl; Durchflussrate 0,5 ml/min). Die Kalibrierung zur Bestimmung der mittleren Molmasse erfolgte mit linearen Poly(ethylenoxid)- und Polyethylenglykol-Standards. Als Maß für den Umsatz wird der Peak des Copolymers auf eine relative Höhe von 1 normiert und die Höhe des Peaks des nichtumgesetzten Makromonomer/PEG-haltigen Oligomers als Maß für den Restmonomerengehalt verwendet.

Vorzugsweise erfüllt das polymere Dispergiermittel die Anforderungen der Industrienorm EN 934-2 (Februar 2002).

Das Polymer umfasst als anionische oder anionogene Gruppe zumindest eine Struktureinheit der allgemeinen Formeln (la), (Ib), (Ic) und/oder (Id): 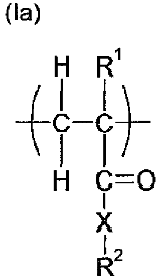 worin
R¹ für H oder eine unverzweigte oder verzweigte C₁-C₄-Alkylgruppe, CH₂COOH oder CH₂CO-X-R³ vorzugsweise für H oder CH₃, steht;
X für NH-(CₙH₂ₙ), O(CₙH₂ₙ) mit n = 1, 2, 3 oder 4, wobei das Stickstoffatom bzw. das Sauerstoffatom an die CO-Gruppe gebunden ist, oder für eine chemische Bindung, vorzugsweise für X = chemische Bindung oder O(CₙH₂ₙ), steht;
R² für OM, PO₃M₂, oder O-PO₃M₂ steht; mit der Maßgabe, dass X für eine chemische Bindung steht, wenn R² für OM steht;
R³ für PO₃M₂, oder O-PO₃M₂ steht; 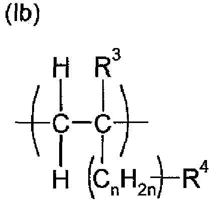 worin
   R³ für H oder eine unverzweigte oder verzweigte C₁-C₄-Alkylgruppe, vorzugsweise für H oder CH₃, steht;
   n für 0, 1, 2, 3 oder 4, vorzugsweise für 0 oder 1, steht;
   R⁴ für PO₃M₂, oder O-PO₃M₂ steht; 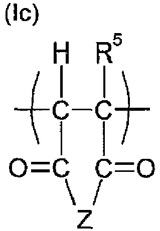 worin
      R⁵ für H oder eine unverzweigte oder verzweigte C₁-C₄-Alkylgruppe, vorzugsweise für H, steht;
      Z für O oder NR⁷, vorzugsweise für O, steht; und
      R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
      n für 1, 2, 3 oder 4, vorzugsweise für 1, 2 oder 3, steht; 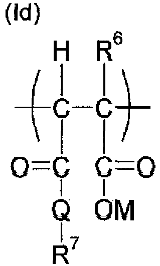 worin
         R⁶ für H oder eine unverzweigte oder verzweigte C₁-C₄-Alkylgruppe, vorzugsweise für H, steht;
         Q für NR⁷ oder O, vorzugsweise für O, steht;
         R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
         n für 1, 2, 3 oder 4, vorzugsweise für 1, 2 oder 3, steht; und wobei jedes M unabhängig voneinander für H oder ein Kationäquivalent steht.

Weiterhin bevorzugt umfasst das Polymer als anionische oder anionogene Gruppe mindestens eine Struktureinheit der Formel (Ia), worin R¹ für H oder CH₃ steht; und/oder mindestens eine Struktureinheit der Formel (Ib), worin R³ für H oder CH₃ steht; und/oder mindestens eine Struktureinheit der Formel (Ic), worin R⁵ für H oder CH₃ steht und Z für O steht; und/oder mindestens eine Struktureinheit der Formel (Id), worin R⁶ für H steht und Q für O.

Besonders bevorzugt umfasst das Polymer als anionische oder anionogene Gruppe mindestens eine Struktureinheit der Formel (la), worin R¹ für H oder CH₃ steht und XR² für OM oder X für O(CₙH₂ₙ) mit n = 1, 2, 3 oder 4, insbesondere 2, steht und R² für O-PO₃M₂ steht.

Das Polymer umfasst als Polyetherseitenkette zumindest eine Struktureinheit der allgemeinen Formeln (IIa) und/oder (IIb): 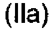 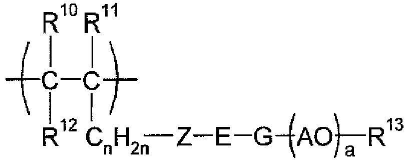 worin
R¹⁰, R" und R¹² unabhängig voneinander für H oder eine unverzweigte oder verzweigte C₁-C₄-Alkylgruppe stehen;
Z für O oder S steht;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
G für O, NH oder CO-NH steht; oder
E und G gemeinsam für eine chemische Bindung stehen;
A für CₓH₂ₓ mit x = 2, 3, 4 oder 5, oder CH₂CH(C₆H₅), vorzugsweise für 2 oder 3, steht;
n für 0, 1, 2, 3, 4 und/oder 5, vorzugsweise für 0, 1 oder 2, steht;
a für eine ganze Zahl von 2 bis 350, vorzugsweise 5 bis 150, steht;
R¹³ für H, eine unverzweigte oder verzweigte C₁-C₄-Alkylgruppe, CO-NH₂ und/oder COCH₃ steht; 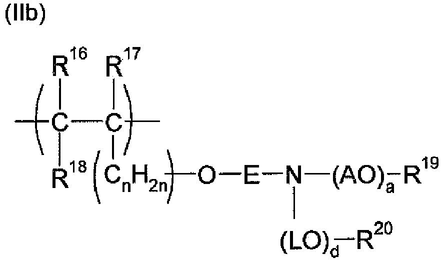 worin
   R¹⁶, R¹⁷ und R¹⁸ unabhängig voneinander für H oder eine unverzweigte oder verzweigte C₁-C₄-Alkylgruppe stehen;
   E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
   A für CₓH₂ₓ mit x = 2, 3, 4 oder 5 oder CH₂CH(C₆H₅), vorzugsweise für 2 oder 3, steht:
      L für CₓH₂ₓ mit x = 2, 3, 4 oder 5 oder CH₂-CH(C₆H₅), vorzugsweise für 2 oder 3, steht;
      a für eine ganze Zahl von 2 bis 350, vorzugsweise 5 bis 150, steht;
      d für eine ganze Zahl von 1 bis 350, vorzugsweise 5 bis 150, steht;
      R¹⁹ für H oder eine unverzweigte oder verzweigte C₁-C₄-Alkylgruppe steht;
      R²⁰ für H oder eine unverzweigte oder verzweigte C₁-C₄-Alkylgruppe steht; und
      n für 0, 1, 2, 3, 4 oder 5, vorzugsweise für 0, 1 oder 2, steht;

Weiterhin bevorzugt umfasst das Polymer als Polyetherseitenkette
(a) mindestens eine Struktureinheit der Formel (IIa), worin R¹⁰ und R¹² für H stehen, R¹¹ für H oder CH₃ steht, E und G gemeinsam für eine chemische Bindung stehen, A für CₓH₂ₓ mit x = 2 und/oder 3, a für 3 bis 150 steht, und R¹³ für H oder eine unverzweigte oder verzweigte C₁-C₄-Alkylgruppe steht.
(b) mindestens eine Struktureinheit der Formel (IIb, worin R¹⁶ und R¹⁸ für H stehen, R¹⁷ für H oder CH₃ steht, E für eine unverzweigte oder verzweigte C₁-C₆-Alkylengruppe steht, A für CₓH₂ₓ mit x = 2 und/oder 3 steht, L für CₓH₂ₓ mit x = 2 und/oder 3 steht, a für eine ganze Zahl von 2 bis 150 steht, d für eine ganze Zahl von 1 bis 150 steht, R¹⁹ für H oder eine unverzweigte oder verzweigte C₁-C₄-Alkylgruppe steht, und R²⁰ für H oder eine unverzweigte oder verzweigte C₁-C₄-Alkylgruppe steht;und/oder
Besonders bevorzugt umfasst das Polymer mindestens eine Struktureinheit der Formel (IIa). Nach einer alternativen Ausführungsform ist das polymere Dispergiermittel ein Polykondensationsprodukt, das wenigstens eine aromatische oder heteroaromatische Struktureinheit mit einer Polyetherseitenkette und wenigstens eine aromatische oder heteroaromatische Struktureinheit mit wenigstens einer Phosphorsäureestergruppe oder einem Salz davon umfasst. Das Polykondensationsprodukt umfasst Struktureinheiten (III) und (IV): 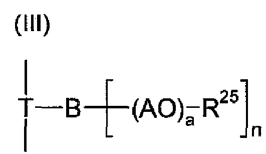 worin
T für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für CₓH₂ₓ mit x = 2, 3, 4 oder 5 oder CH₂CH(C₆H₅), vorzugsweise 2 oder 3, steht;
a für eine ganze Zahl von 1 bis 300, vorzugsweise 5 bis 150, steht;
R²⁵ für H, einen verzweigten oder unverzweigten C₁- bis C₁₀-Alkylrest, C₅- bis C₈-Cycloalkylrest, Arylrest, oder Heteroarylrest mit 5 bis 10 Ringatomen, wovon 1 oder 2 Atome Heteroatome sind, die ausgewählt sind unter N, O und S, vorzugsweise für H, steht;
wobei die Struktureinheit (IV) ausgewählt ist unter den Struktureinheiten (IVa) und (IVb): 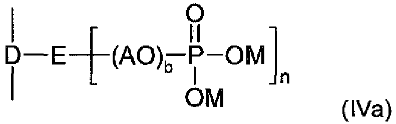 worin
D für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass m für 2 steht, wenn E für N steht und der Maßgabe, dass n für 1 steht, wenn E für NH oder O steht;
A für CₓH₂ₓ mit x = 2, 3, 4 oder 5 oder CH₂CH(C₆H₅), vorzugsweise 2 oder 3, steht;
b für eine ganze Zahl von 1 bis 300, vorzugsweise 5 bis 150, steht;
M unabhängig voneinander für H oder ein Kationäquivalent stehen; 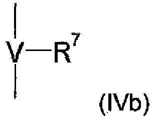 worin
   V für einen substituierten oder unsubstituierten Phenylrest oder einen substituierten oder unsubstituierten Naphthylrest steht; und gegebenenfalls durch 1 oder zwei Reste substituiert ist, die ausgewählt sind unter R⁸, OH, OR⁸, (CO)R⁸, COOM, COOR⁸, SO₃R⁸ und NO₂, vorzugsweise OH, OC₁-C₄-Alkyl und C₁-C₄-Alkyl;
   R⁷ für COOM, OCH₂COOM, SO₃M oder OPO₃M₂ steht;
   M für H oder ein Kationäquivalent steht;
   wobei die erwähnten Phenyl-, Naphthyl- oder heteroaromatischen Reste gegebenenfalls durch 1 oder zwei Reste substituiert sind, die ausgewählt sind unter R⁸, OH, OR⁸, (CO)R⁸, COOM, COOR⁸, SO₃R⁸ und NO₂; und
   R⁸ für C₁-C₄-Alkyl, Phenyl, Naphthyl, Phenyl-C₁-C₄-alkyl oder C₁-C₄-Alkylphenyl steht.

Weiterhin bevorzugt umfasst das Polymer ein Polykondensationsprodukt umfassend Struktureinheiten (III) und (IV), wobei T für einen substituierten oder unsubstituierten Phenylrest oder Naphthylrest steht, E für NH oder O steht, A für CₓH₂ₓ mit x = 2 und/oder 3 steht, a für eine ganze Zahl von 1 bis 150 steht, und R²⁵ für H, oder einen verzweigten oder unverzweigten C₁- bis C₁₀-Alkylrest steht.

Weiterhin bevorzugt umfasst das Polymer ein Polykondensationsprodukt umfassend Struktureinheiten (III) und (IV) wobei D für einen substituierten oder unsubstituierten Phenylrest oder Naphthylrest steht, E für NH oder O steht, A für CₓH₂ₓ mit x = 2 und/oder 3 steht, und b für eine ganze Zahl von 1 bis 150 steht.

Besonders bevorzugt umfasst das Polymer ein Polykondensationsprodukt umfassend Struktureinheiten (III) und (IV) wobei T und/oder D für Phenyl oder Naphthyl, das durch 1 oder 2 C₁-C₄-Alkyl-, Hydroxy- oder 2 C₁-C₄-Alkoxygruppen substituiert ist, stehen.

Das Polykondensationsprodukt kann Struktureinheiten (IVb) umfassen, wobei V für Phenyl oder Naphthyl, das durch 1 oder 2 C₁-C₄-Alkyl, OH, OCH₃ oder COOM substituiert ist, und R⁷ für COOM oder OCH₂COOM steht.

Das Polykondensationsprodukt kann eine von der entsprechenden Carbonylverbindung abgeleitete weitere Struktureinheit (V) der Formel 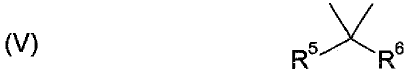 umfassen, worin
R⁵ und R⁶ gleich oder verschieden sein können und für H, CH₃, COOH oder eine substituierte oder unsubstituierte Phenyl- oder Naphthylgruppe oder für eine substituierte oder unsubstituierte heteroaromatische Gruppe mit 5 bis 10 Ringatomen, wovon 1 oder 2 Atome Heteroatome sind, die ausgewählt sind unter N, O und S.

Bevorzugt sind R⁵ und R⁶ in der Struktureinheit (V) gleich oder verschieden und stehen für H, CH₃, oder COOH, insbesondere für H oder einer der Reste R⁵ und R⁶ steht für H und der andere für CH₃.

Die Struktureinheiten (III) sind vorzugsweise abgeleitet von alkoxylierten hydroxy- oder aminofunktionalisierten Aromaten oder Heteroaromaten, beispielsweise alkoxyliertem(n) Phenoxyethanol, Phenoxypropanol, 2-Alkoxyphenoxyethanolen, 4-Alkoxyphenoxyethanolen, 2-Alkylphenoxyethanolen und 4-Alkylphenoxyethanolen, N,N-(Dihydroxyethyl)anilin, N-(Hydroxyethyl)anilin, N,N-(Dihydroxypropyl)anilin und N-(Hydroxypropyl)anilin. Besonders bevorzugt sind alkoxylierte Phenolderivate (beispielsweise Phenoxyethanol oder Phenoxypropanol), ganz besonders bevorzugt alkoxylierte, insbesondere ethoxylierte Phenolderivate mit gewichtsmittlerem Molekulargewicht zwischen 300 g/mol und 10.000 g/mol (beispielsweise Polyethylenglykolmonophenylether).

Die Struktureinheiten (IV) sind vorzugsweise abgeleitet von phosphatierten, alkoxylierten hydroxy- oder aminofunktionalisierten Aromaten oder Heteroaromaten, beispielsweise Phenoxyethanolphosphat, Polyethylenglykolmonophenyletherphosphaten, N,N-(Dihydroxyethyl)-anilindiphosphat, N,N-(Dihydroxyethyl)anilinphosphat, N-(Hydroxypropyl)anilinphosphat), die mindestens eine Phosphorsäureestergruppe und/oder ein Salz der Phosphorsäureestergruppe aufweisen (z.B. durch Veresterung mit Phosphorsäure und gegebenenfalls Zugabe von Basen). Besonders bevorzugt sind alkoxylierte Phenole mit mindestens einer Phosphorsäureestergruppe und/oder einem Salz der Phosphorsäureestergruppe (beispielsweise Polyethylenglykolmonophenyletherphosphate mit weniger als 25 Ethylenglykoleinheiten), und ganz besonders bevorzugt sind die jeweiligen alkoxylierten Phenole mit gewichtsmittleren Molekulargewichten zwischen 200 g/mol und 600 g/mol (beispielsweise Phenoxyethanolphosphat, Polyethylenglykolmonophenyletherphosphate mit 2 bis 10 Ethylenglykoleinheiten), wobei die alkoxylierten Phenole mindestens eine Phosphorsäureestergruppe und/oder ein Salz der Phosphorsäureestergruppe aufweisen (z.B. durch Veresterung mit Phosphorsäure und gegebenenfalls Zugabe von Basen).

Die Struktureinheiten (V) sind vorzugsweise abgeleitet von Formaldehyd, Acetaldehyd, Aceton, Glyoxylsäure, und/oder Benzaldehyd. Formaldehyd ist bevorzugt.

In einer Ausführungsform umfasst das Polymer Struktureinheiten der Formeln (Ia) und (IIa).

In einer anderen Ausführungsform umfasst das Polymer Struktureinheiten der Formeln (Ic) und (IIa).

In einer anderen Ausführungsform umfasst das Polymer Struktureinheiten der Formeln (Ia), (Ic) und (IIa).

Das Polymer kann aufgebaut sein aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester, und/oder Hydroxyethylmethacrylat-Phosphorsäurediester und (ii) Polyetherseitenkettenstruktureinheiten, die abgeleitet sind von Vinyloxy-C₂-C₄-alkylen-polyethylenglykol, Vinyloxy-C₂-C₄-alkylen-polyethylenglykol-C₁-C₄-alkylether, Allyloxy- polyethylenglykol, Allyloxy- polyethylenglykol-C₁-C₄-alkylether, Methallyloxy-polyethylenglykol, Methallyloxy-polyethylenglykol-C₁-C₄-alkylether, Isoprenyloxy-polyethylenglykol und/oder Isoprenyloxy-polyethylenglykol-C₁-C4-alkylether. Bevorzugt ist das Polymer aus Struktureinheiten (i) und (ii) aufgebaut, die abgeleitet sind von (i) Acrylsäure Methacrylsäure und/oder Maleinsäure und (ii) Vinyloxy-C₂-C₄-alkylen-polyethylenglykol, Allyloxy-polyethylenglykol, Methallyloxy-polyethylen-glykol und/oder Isoprenyloxy-polyethylenglykol.

Besonders bevorzugt ist das Polymer aufgebaut ist aus Struktureinheiten (i) und (ii), die abgeleitet sind von
(i) Acrylsäure und Maleinsäure und (ii) Vinyloxy-C₂-C₄-alkylen-polyethylenglykol oder
(i) Acrylsäure und Maleinsäure und (ii) Isoprenyloxy-polyethylenglykol oder
(i) Acrylsäure und (ii) Vinyloxy-C₂-C₄-alkylen-polyethylenglykol oder
(i) Acrylsäure und (ii) Isoprenyloxy-polyethylenglykol oder
(i) Acrylsäure und (ii) Methallyloxy-polyethylenglykol oder
(i) Maleinsäure und (ii) Isoprenyloxy-polyethylenglykol oder
(i) Maleinsäure und (ii) Allyloxy-polyethylenglykol oder
(i) Maleinsäure und (ii) Methallyloxy-polyethylenglykol

In einer Ausführungsform beträgt das Molverhältnis der Struktureinheiten (I): (II) 1:4 bis 15:1, insbesondere 1:1 bis 10:1.

In einer anderen Ausführungsform beträgt das Molverhältnis der Struktureinheiten (III): (IV) 4:1 bis 1:15, insbesondere 2:1 bis 1:10.

In einer anderen Ausführungsform beträgt das Molverhältnis der Struktureinheiten (III + IV): (V) 2:1 bis 1:3, insbesondere 1:0,8 bis 1:2.

In einer besonders bevorzugten Ausführungsform umfasst das Polymer ein Polykondensationsprodukt das aus Struktureinheiten der Formeln (III) und (IV) aufgebaut ist, worin T und D für Phenyl oder Naphthyl steht, wobei das Phenyl oder Naphthyl die gegebenenfalls durch 1 oder 2 C₁-C₄-Alkyl-, Hydroxy- oder 2 C₁-C₄-Alkoxygruppen substituiert ist, B und E für O stehen, A für CₓH₂ₓ mit x = 2 steht, a für 3 bis 150, insbesondere 10 bis 150, steht, und b für 1, 2 oder 3 steht. Die Herstellung der polymeren Dispergiermittel, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488. Die Herstellung der polymeren Dispergiermittel, welche die Struktureinheiten (III), (IV) und (V) enthalten, erfolgt typischerweise nach einem Verfahren, bei dem man in einer Polykondensation die Verbindungen miteinander umsetzt, die den Struktureinheiten (III), (IV) und (V) zugrundeliegen. Die Herstellung der Polykondensate ist beispielsweise beschrieben in US 2008/0108732, WO 2006/042709 und WO 2010/026155. Das Additiv kann als wässrige Suspension oder nach Trocknung in Form eines Trockenproduktes, beispielsweise als stückiges Material, als pulverförmiges Material, als Schüttgut und/oder als Pulver, vorzugsweise als Pulver, vorliegen. Wenn das Additiv als Suspension vorliegt, kann die Verbindung der Formel (I) in gelöster oder suspendierter Form vorliegen. Als Trockenprodukt weist das Additiv einen Wassergehalt von weniger als 15 Gew.-%, bevorzugt von weniger als 10 Gew.-%, besonders bevorzugt von weniger als 7 Gew.-%, auf.

Der Wassergehalt wird ermittelt durch Bestimmung des Masseverlustes des Pulvers bei 100 °C, indem 1 g Pulver 3 h im Umlufttrockenschrank bei 100 °C gelagert wird.

Der Begriff Calciumsilikathydrat erfasst auch Calciumsilikathydrat, das Fremdionen, wie z. B. Magnesium- und Aluminiumkationen enthält.

Die Zusammensetzung der C-S-H-Partikel kann im Allgemeinen durch die folgende Summenformel beschrieben werden:

a CaO, SiO₂, b Al₂O₃, c H₂O, d X, e W

X ist ein Alkalimetall
W ist ein Erdalkalimetall

| | | |
|---|---|---|
| 0,1 ≤ a ≤ 2 | vorzugsweise | 0,66 ≤ a ≤ 1,8 |
| 0 ≤ b ≤ 1 | vorzugsweise | 0 ≤ b ≤ 0,1 |
| 1 ≤ c ≤ 6 | vorzugsweise | 1 ≤ c ≤ 6,0 |
| 0 ≤ d ≤ 1 | vorzugsweise | 0 ≤ d ≤ 0,4 |
| 0 ≤ e ≤ 2 | vorzugsweise | 0 ≤ e ≤ 0,1 |

In einer bevorzugten Ausführungsform enthält die wässrige Lösung neben Silikat- und Calciumionen weitere gelöste Ionen, die vorzugsweise in Form von gelösten Aluminiumsalzen und/oder gelösten Magnesiumsalzen bereitgestellt werden. Als Aluminiumsalze können vorzugsweise Aluminiumhalogenid, Aluminiumnitrat, Aluminiumhydroxid und/oder Aluminiumsulfat eingesetzt werden. In der Gruppe der Aluminiumhalogenide ist Aluminiumchlorid besonders bevorzugt. Bei den Magnesiumsalzen kann es sich vorzugsweise um Magnesiumnitrat, Magnesiumchlorid und/oder Magnesiumsulfat handeln. Der Vorteil der Aluminiumsalze und Magnesiumsalze besteht darin, dass durch die Einführung von Ionen, die von Calcium und Silizium verschieden sind, Defekte im Calciumsilikathydrat erzeugt werden können. Dies führt zu einer verbesserten Erhärtungsbeschleunigungswirkung. Vorzugsweise ist das Molverhältnis von Aluminium und/oder Magnesium zu Calcium und Silizium klein. Besonders bevorzugt sind die Molverhältnisse so gewählt, dass in der obigen Summenformel die bevorzugten Bereiche für a, b und e erfüllt sind (0,66 ≤ a ≤ 1,8; 0 ≤ b ≤ 0,1; 0 ≤ e ≤ 0,1).

Typischerweise liegen die Calciumsilikathydratpartikel zumindest teilweise in einer oder mehreren der folgenden Kristallstrukturen vor: Foshagit, Hillebrandit, Xonotlit, Nekoit, Clinotobermorit, 9Å-Tobermorit (Riversiderit), 11Å-Tobermorit, 14Å-Tobermorit (Plombierit), Jennit, Metajennit, Calciumchondrodit, Afwillit, α-C₂SH, Dellait, Jaffeit, Rosenhahnit, Killalait und/oder Suolunit.

Besonders bevorzugt liegen die Calciumsilikathydratpartikel als Xonotlit, 9Å-Tobermorit (Riversiderit), 11Å-Tobermorit, 14Å-Tobermorit (Plombierit), Jennit, Metajennit, Afwillit und/oder Jaffeit vor.

Das Molverhältnis von Calcium zu Silicium beträgt in den Calciumsilikathydratpartikeln des Additivs für hydraulisch abbindende Massen 0,6 bis 2, bevorzugt 0,8 bis 1,8, besonders bevorzugt 0,9 bis 1,6, insbesondere bevorzugt 1,0 bis 1,5.

Das Molverhältnis von Calcium zu Wasser beträgt in den Calciumsilikathydratpartikeln des Additivs für hydraulisch abbindende Massen 0,6 bis 6, bevorzugt 0,6 bis 4, besonders bevorzugt 0,8 bis 2. Diese Molverhältnisse ähneln denjenigen, die beispielsweise in Calciumsilikathydratphasen, die durch Hydratation von Zement gebildet werden, gefunden werden.

Vorzugsweise enthält das als Suspension vorliegende Additiv für hydraulisch abbindende Massen
i) 0,1 bis 20 Gew.-%, vorzugsweise 1 bis 15 Gew.-% und ganz besonders bevorzugt 3 bis 10 Gew.-% der Calciumsilikathydratpartikel,
ii) 0,1 bis 30 Gew.-%, vorzugsweise 1 bis 20 Gew.-% und ganz besonders bevorzugt 1 bis 10 Gew.-% des Dispergiermittels,
iii) 1 bis 30 Gew.-%, vorzugsweise 5 bis 25 Gew.-% und ganz besonders bevorzugt 10 bis 20 Gew.-% der Sulfonsäureverbindung, und
iv) 24 bis 99 Gew.-%, besonders bevorzugt 50 bis 99 Gew.-% und ganz besonders bevorzugt 60 bis 90 Gew.-% Wasser.

Besonders bevorzugt liegt das Additiv in Pulverform vor und enthält dann:
i) 10 bis 70 Gew.-%, vorzugsweise 20 bis 50 Gew.% und ganz besonders bevorzugt 20 bis 30 Gew.-% der Calciumsilikathydratpartikel,
ii) 5 bis 50 Gew.-%, vorzugsweise 10 bis 30 Gew.-% und ganz besonders bevorzugt 15 bis 25 Gew.-% des Dispergiermittels,
iii) 30 bis 80 Gew.-% und vorzugsweise 45 bis 65 Gew.-% der Sulfonsäureverbindung, und
iv) 1 bis 15 Gew.-% und vorzugsweise 2 bis 10 Gew.-% Wasser.

Es ist besonders vorteilhaft, das erfindungsgemäße Additiv in Kombination mit Zementen mit einem relativ hohen Gehalt an löslichen Sulfaten (0,1 bis 5 Gew.-%, bezogen auf den Zement) einzusetzen. Derartige Zemente sind im Handel erhältlich oder können mit dem wasserlöslichen Sulfatsalz versetzt werden. Der Zement ist vorzugsweise reich an wasserfreien Aluminatphasen. Vorzugsweise wird das wasserlösliche Sulfat aus Natrium- und/oder Kaliumsulfat ausgewählt. Die Kombination der löslichen Sulfate und erfindungsgemäßen Erhärtungsbeschleuniger führt zu einer synergistischen Erhärtungsbeschleunigungswirkung von Zement.

Dem erfindungsgemäßen Additiv können Erhärtungsbeschleuniger aus der Gruppe der Alkanolamine, bevorzugt Triisopropanolamin und/oder Tetrahydroxyethylethylendiamin (THEED) zugesetzt werden. Vorzugsweise werden die Alkanolamine in einer Dosierung von 0,01 bis 2,5 Gew.-%, bezogen auf das Gewicht des hydraulischen Bindemittels, vorzugsweise Zement, eingesetzt. Bei Verwendung von Aminen, insbesondere Triisopropanolamin und Tetrahydroxyethylethylendiamin, können synergistische Effekte bezüglich der Frühfestigkeitsentwicklung von hydraulischen Bindemittelsystemen, insbesondere zementartigen Systemen, gefunden werden.

Das erfindungsgemäße Additiv kann Erstarrungsverzögerer aus der Gruppe Zitronensäure, Weinsäure, Glukonsäure, Phosphonsäure, Aminotrimethylenphosphonsäure, Ethylendiaminotetra(methylenphosphon)säure, Diethylentriaminopenta(methylenphosphon)-säure, jeweils einschließlich der jeweiligen Salze der Säuren, Pyrophosphate, Pentaborate, Metaborate und/oder Zucker (z.B. Glukose, Melassen) enthalten. Der Vorteil der Zugabe von Erstarrungsverzögerern besteht darin, dass die offene Zeit gesteuert und insbesondere gegebenenfalls verlängert werden kann. Vorzugsweise werden die Erstarrungsverzögerer in einer Dosierung von 0,01 bis 0,5 Gew.-%, bezogen auf das Gewicht des hydraulischen Bindemittels, vorzugsweise Zement, eingesetzt.

Das erfindungsgemäße Additiv kann auch Formulierungskomponenten enthalten, die typischerweise auf dem Gebiet der Bauchemikalien verwendet werden, vorzugsweise Entschäumer, Luftporenbildner, Verzögerer, schwindungsverringernde Mittel, redispergierbare Pulver, andere Erhärtungsbeschleuniger, Frostschutzmittel und/oder Antiausblühmittel.

Ein erfindungsgemäßes Additiv ist einerseits erhältlich durch A) Reaktion wenigstens eines wasserlöslichen Calciumsalzes einer nicht polymeren Sulfonsäure der Formel (I), worin Kⁿ⁺ für Ca²⁺ steht, mit wenigstens einer wasserlöslichen anorganischen Silikatverbindung in Gegenwart einer wässrigen Lösung eines Dispergiermittels. Das Calciumsulfonsäuresalz der nicht polymeren Sulfonsäure dient in Reaktion A) als (ein) Edukt der Reaktion (Calciumquelle), bei der die Calciumsilikathydratpartikel gebildet werden. Erfindungsgemäß liegen nach der Reaktion A) Sulfonsäuresalze und/oder Sulfonsäureanionen im Additiv vor.

Ein erfindungsgemäßes Additiv ist andererseits erhältlich durch B) Reaktion) einer wasserlöslichen Calciumverbindung (bei der es sich bevorzugt nicht um das Calciumsalz einer nicht polymeren Sulfonsäure handelt) mit wenigstens einer wasserlöslichen anorganischen Silikatverbindung in Gegenwart einer wässrigen Lösung eines Dispergiermittels, unter Zugabe eines wasserlöslichen nicht polymeren Sulfonsäuresalzes. Das Sulfonsäuresalz kann vor, während und bevorzugt nach der Reaktion zugegeben werden. Es verbessert die Trocknungseigenschaften der C-S-H-Suspension und ermöglicht, die härtungsbeschleunigenden Eigenschaft des erfindungsgemäßen Additivs auch über einen anschließenden Trocknungsschritt hinweg aufrechtzuerhalten. Somit wirkt es als Trocknungshilfsmittel.

In einer bevorzugten Ausführungsform des Additivs für hydraulisch abbindende Massen, liegt das molare Verhältnis der enthaltenen Sulfonsäureverbindung zu Silicium im Bereich von 0,5 bis 8, vorzugsweise 0,5 bis 5, insbesondere 1 bis 5. Wenn das Additiv erhältlich ist durch Reaktion A), liegt das Verhältnis bevorzugt im Bereich von 1 bis 4, insbesondere 2 bis 4. Wenn das Additiv erhältlich ist durch Reaktion A), liegt das Verhältnis bevorzugt im Bereich von 2,5 bis 5,5.

Bevorzugt liegt das erfindungsgemäße Additiv frei von hydraulischen Bindemitteln, insbesondere zementfrei vor. "Frei" bzw. "zementfrei" bedeutet, dass das Additiv im allgemeinen weniger als 10 Gew.-%, vorzugsweise weniger als 5 Gew.-%, insbesondere weniger als 1 Gew.-% und besonders bevorzugt 0 Gew.-%, an hydraulischem Bindemittel, insbesondere Zement enthält.

Die Erfindung betrifft auch Verfahren zur Herstellung des oben beschriebenen Additivs.

Verfahren A) zur Herstellung eines erfindungsgemäßen Additivs erfolgt durch Reaktion A) wenigstens eines wasserlöslichen Calciumsalzes einer nicht polymeren Sulfonsäure der Formel (I) (Kⁿ⁺ steht für Ca²⁺ mit wenigstens einer wasserlöslichen anorganischen Silikatverbindung in Gegenwart einer wässrigen Lösung eines polymeren Dispergiermittels. Dabei ist es bevorzugt, die Sulfonsäure in höchstens stöchiometrisher Menge einzusetzen, d.h. es wird kein Überschuss an Sulfonsäure verwendet. Erfindungsgemäß liegen im Produkt des Verfahrens A) Sulfonsäuresalze und/oder Sulfonsäureanionen der Formel (I) vor.

Verfahren B) zur Herstellung eines erfindungsgemäßen Additivs erfolgt durch Reaktion einer wasserlöslichen Calciumverbindung (bei der es sich bevorzugt nicht um das Calciumsalz einer nicht polymeren Sulfonsäure handelt) mit wenigstens einer wasserlöslichen anorganischen Silikatverbindung in Gegenwart einer wässrigen Lösung eines Dispergiermittels, und wobei ein wasserlösliches nicht polymeres Sulfonsäuresalz zugegeben wird. Das wasserlösliche Sulfonsäuresalz kann vor, während und bevorzugt nach der Reaktion zugegeben werden. In einem fakultativen Trocknungsschritt, der nach Zugabe des wasserlöslichen Sulfonsäuresalzes erfolgen kann, dient das wasserlösliche Sulfonsäuresalz als Trocknungshilfsmittel.

Als wasserlösliches Calciumsulfonsäuresalz, als wasserlösliche anorganische Silikatverbindung, als wasserlöslichen Calciumverbindung und als wasserlösliches Sulfonsäuresalz kommen auch nur verhältnismäßig schlecht in Wasser lösliche Verbindungen in Frage. Es muss jedoch gewährleistet sein, dass eine für die Umsetzung in der wässrigen Umgebung mit dem entsprechenden Reaktionspartner (entweder wasserlösliche Calciumverbindung oder wasserlösliche Silikatverbindung) ausreichende Reaktivität vorliegt. Die Löslichkeit des wasserlöslichen Calciumsulfonsäuresalzes, der wasserlöslichen anorganische Silikatverbindung, der wasserlöslichen Calciumverbindung und des wasserlöslichen Sulfonsäuresalzes ist im allgemeinen jeweils größer als 0,01 g/l, bevorzugt größer als 0,1 g/l, weiterhin bevorzugt größer als 1 g/l, besonders bevorzugt größer als 10 g/l, ganz besonders bevorzugt größer als 50 g/l. Die Löslichkeit bezieht sich auf Wasser als Lösungsmittel bei 20 °C und 1 bar (absolut).

In einer bevorzugten Ausführungsform des Verfahrens A) werden das wasserlösliche Calciumsulfonsäuresalz und die wasserlösliche anorganische Silikatverbindung in getrennten Gefäßen je zumindest teilweise in Wasser gelöst und anschließend durch Zugabe beider Lösungen zur wässrigen Lösung des Dispergiermittels zur Reaktion gebracht, wobei die Temperatur konstant auf 20 °C gehalten wird. Alternativ können die Lösungen des wasserlöslichen Sulfonsäuresalzes des Calciums und/oder der wasserlöslichen Silikatverbindung vor der Reaktion zunächst auch mit zumindest einem Teil der wässrigen Lösung des Dispergiermittels versetzt werden. Das Dispergiermittel kann also auf mindestens zwei oder drei Lösungen verteilt sein. Vorteilhafterweise sind 1 bis 50% und vorzugsweise 10 bis 25% der Gesamtmenge des Dispergiermittels in der Lösung des wasserlöslichen Sulfonsäuresalzes des Calciums und/oder der Lösung der wasserlöslichen anorganischen Silikatverbindung enthalten.

In einer bevorzugten Ausführungsform des Verfahrens B) werden die wasserlösliche Calciumverbindung und die wasserlösliche anorganische Silikatverbindung in getrennten Gefäßen je zumindest teilweise in Wasser gelöst und anschließend durch Zugabe beider Lösungen zur wässrigen Lösung des Dispergiermittels zur Reaktion gebracht, wobei die Temperatur konstant auf 20 °C gehalten wird. Alternativ können die Lösungen der wasserlöslichen Calciumverbindung und/oder der wasserlöslichen Silikatverbindung vor der Reaktion zunächst auch mit zumindest einem Teil der wässrigen Lösung des Dispergiermittels versetzt werden. Das Dispergiermittel kann also auf mindestens zwei oder drei Lösungen verteilt sein. Vorteilhafterweise sind 1 bis 50% und vorzugsweise 10 bis 25% der Gesamtmenge des Dispergiermittels in der Lösung der wasserlöslichen Calciumverbindung und/oder der Lösung der wasserlöslichen anorganischen Silikatverbindungenthalten.

Die wässrige Lösung des Dispergiermittels kann neben Wasser auch noch ein oder mehrere weitere Lösungsmittel (beispielsweise Alkohole wie Ethanol und/oder Isopropanol) enthalten. Vorzugsweise beträgt der Gewichtsanteil des von Wasser verschiedenen Lösungsmittels, bezogen auf die Summe aller Lösungsmittel bis zu 20 Gew.-%, besonders bevorzugt weniger als 10 Gew.-% und ganz besonders bevorzugt weniger als 5 Gew.-%. Ganz besonders bevorzugt sind jedoch wässrige Systeme ohne jegliches Lösungsmittel. Der Temperaturbereich, in dem das Verfahren durchgeführt wird, unterliegt keinen besonderen Einschränkungen. Bestimmte Grenzen werden jedoch durch den physikalischen Zustand des Systems bedingt. Vorzugsweise arbeitet man im Bereich von 0 bis 100°C, besonders bevorzugt von 5 bis 80°C und ganz besonders bevorzugt von 15 bis 35°C.

Das Verfahren kann auch bei verschiedenen Drücken, vorzugsweise im Bereich von 1 bis 5 bar, durchgeführt werden.

Der pH-Wert hängt von der Menge und Art der Reaktionspartner und von der Menge und Art des Dispergiermittels ab. Bevorzugt liegt der pH-Wert am Ende der Synthese höher als 8 und vorzugsweise im Bereich zwischen 8 und 13,5. Alternativ kann der pH-Wert durch Säure- oder Basenzugabe eingestellt werden.

In einer bevorzugten Ausführungsform des Verfahrens A) erfolgt die Zugabe des wasserlöslichen Sulfonsäuresalzes des Calciums und der wasserlösliche anorganische Silikatverbindung zu der wässrigen Lösung des Dispergiermittels in einem zyklischen Semibatch-Verfahren mit einem in Serie angeordneten ersten und zweiten Reaktor. Dabei wird die wässrige Lösung des Dispergiermittels im zweiten Reaktor vorgelegt. Der erste Reaktor wird mit der Lösung der wasserlöslichen anorganischen Silikatverbindung, der Lösung des wasserlöslichen Sulfonsäuresalzes des Calciums und mit dem Inhalt des zweiten Reaktors beaufschlagt und der Ausfluss des ersten Reaktors in den zweiten Reaktor gegeben.

In einer weiteren bevorzugten Ausführungsform der Verfahren erfolgt die Zugabe im Rahmen eines kontinuierlichen Verfahrens, bei dem das wasserlösliche Calciumsulfonsäuresalz, die wasserlösliche anorganische Silikatverbindung und die wässrigen Lösung des Dispergiermittels im ersten Reaktor gemischt werden und der Ausfluss des ersten Reaktors in einen zweiten Reaktor (Mischflussreaktor (Mixed Flow Reactor) oder Rohrreaktor (Plug Flow Reactor)) eingebracht wird.

Vorzugsweise beträgt das Verhältnis der Volumina des ersten und zweiten Reaktors 1/10 bis 1/20.000. Vorzugsweise ist die Massendurchflussrate des wasserlöslichen Sulfonsäuresalzes des Calciums und der wasserlösliche anorganische Silikatverbindung im Vergleich zu dem aus dem zweiten Reaktor austretenden und im ersten Reaktor eintretenden Massendurchfluss klein; vorzugsweise beträgt das Verhältnis 1/5 bis 1/1000. Bei dem ersten Reaktor kann es sich in der Regel um eine statische oder dynamische Mischeinheit handeln; vorzugsweise sollte das Mischen im ersten Reaktor effektiv sein.

Das Zusammengeben und Vermischen der Komponenten gemäß den Verfahren A) und B) erfolgt bevorzugt unter Verwendung einer Dispergiervorrichtung, die in der Lage ist, mechanische Energie in das Gemisch einzutragen, insbesondere durch Vermahlen, um die Umsetzung der Reaktionskomponenten zu aktivieren und/oder zu beschleunigen und um gewünschtenfalls die Teilchengröße der C-S-H-Partikel zu verringern. Geeignete Dispergiervorrichtungen sind solche, die hohe Scherkräfte auf das Reaktionsgemisch ausüben. Beispiele für geeignete Dispergiervorrichtungen sind Planetenkugelmühlen, Ultradispergiervorrichtungen, Rotor-Statot-Dispergiervorrichtungen und Schüttelvorrichtungen mit Mahlkörpern. Derartige Vorrichtungen sind im Handel erhältlich, z. B. Dispermat der Firma VMA Getzmann GmbH, Disperser DAS H 200 der Firma Lau GmbH, oder Magic Lab der Firma Ika-Werke GmbH.

Das erfindungsgemäße Additiv wird den hydraulisch abbindenden Massen vorzugsweise in einer Menge von 0,01 bis 10 Gew.-% und ganz besonders bevorzugt 0,1 bis 2 Gew.-% des Feststoffgehalts, bezogen auf das hydraulische Bindemittel, vorzugsweise Zement, zudosiert. Die Bestimmung des Feststoffgehalts erfolgt in einem Ofen bei 60°C, bis ein konstantes Gewicht der Probe erreicht ist.

Die wasserlösliche Calciumverbindung des Verfahrens B) wird im Allgemeinen ausgewählt unter Calciumchlorid, Calciumnitrat, Calciumformiat, Calciumacetat, Calciumbicarbonat, Calciumbromid, Calciumcarbonat, Calciumcitrat, Calciumchlorat, Calciumfluorid, Calciumgluconat, Calciumhydroxid, Calciumoxid, Calciumhypochlorid, Calciumiodat, Calciumiodid, Calciumlactat, Calciumnitrit, Calciumoxalat, Calciumphosphat, Calciumpropionat, Calciumsilikat, Calciumstearat, Calciumsulfat, Calciumsulfat Hemihydrat, Calciumsulfat Dihydrat, Calciumsulfid, Calciumtartrat, Calciumaluminat, Tricalciumsilikate, Dicalciumsilikat, und Mischungen zweier oder mehrerer dieser Komponenten. Vorzugsweise handelt es sich bei der wasserlöslichen Calciumverbindung nicht um ein Calciumsilikat. Die Silikate Calciumsilikat, Dicalciumsilikat und/oder Tricalciumsilikat sind wegen geringerer Löslichkeit (insbesondere im Fall von Calciumsilikat) und aus wirtschaftlichen Gründen (Preis) (insbesondere im Fall von Dicalciumsilikat und Tricalciumsilikat) weniger bevorzugt.

Bevorzugt wird die wasserlösliche Calciumverbindung des Verfahrens B) ausgewählt unter Calciumcitrat, Calciumtartrat, Calciumformiat und/oder Calciumsulfat. Der Vorteil dieser Calciumverbindungen besteht in ihrer Nichtkorrosivität. Calciumcitrat und/oder Calciumtartrat werden wegen der möglichen Verzögerungswirkung dieser Anionen bei Verwendung in hohen Konzentrationen vorzugsweise in Kombination mit anderen Calciumquellen verwendet.

In einer weiteren Ausführungsform wird die wasserlösliche Calciumverbindung des Verfahrens B) ausgewählt unter Calciumchlorid und/oder Calciumnitrat. Der Vorteil dieser Calciumverbindungen besteht in ihrer guten Wasserlöslichkeit, ihrem niedrigen Preis und ihrer guten Verfügbarkeit.

Die wasserlösliche anorganische Silikatverbindung liegt im allgemeinen als Natriumsilikat, Kaliumsilikat, Wasserglas, Aluminiumsilikat, Kieselsäure, Natriummetasilikat und/oder Kaliummetasilikat vor.

Vorzugsweise liegt die wasserlösliche anorganische Silikatverbindung als Natriummetasilikat, Kaliummetasilikat und/oder Wasserglas vor. Der Vorteil dieser Silikatverbindungen besteht in ihrer extrem guten Wasserlöslichkeit.

Besonders bevorzugt ist die wasserlösliche anorganische Silikatverbindung ausgewählt ist unter einem Alkalimetallsilikat der Formel m SiO₂ · n M₂O oder Gemischen davon, wobei M für Li, Na, K und NH₄, vorzugsweise für Na oder K, steht, m und n Molzahlen bedeuten und das Verhältnis von m:n etwa 0.9 bis etwa 4, vorzugsweise etwa 0.9 bis etwa 3,8 und insbesondere etwa 0.9 bis etwa 3,6, beträgt.

Die Erfindung betrifft auch ein Verfahren zur Herstellung des Additivs für hydraulisch abbindende Massen durch Umsetzung einer Calciumverbindung, vorzugsweise eines Calciumsalzes, ganz besonders bevorzugt eines wasserlöslichen Calciumsalzes, mit einer siliciumdioxidhaltigen Komponente unter alkalischen Bedingungen, wobei die Umsetzung in Gegenwart einer wässrigen Lösung des Dispergiermittels durchgeführt wird und wobei ein wasserlösliches Sulfonsäuresalz zugegeben wird.

Bei der Calciumverbindung handelt es sich vorzugsweise um Calciumsalze (z.B. Calciumsalze von Carbonsäuren). Bei dem Calciumsalz kann es sich beispielsweise um Calciumchlorid, Calciumnitrat, Calciumformiat, Calciumacetat, Calciumhydrogencarbonat, Calciumbromid, Calciumcarbonat, Calciumcitrat, Calciumchlorat, Calciumfluorid, Calciumgluconat, Calciumhydroxid, Calciumoxid, Calciumhypochlorid, Calciumiodat, Calciumiodid, Calciumlactat, Calciumnitrit, Calciumoxalat, Calciumphosphat, Calciumpropionat, Calciumsilicat, Calciumstearat, Calciumsulfat, Calciumsulfat-Hemihydrat, Calciumsulfat-Dihydrat, Calciumsulfid, Calciumtartrat, Calciumaluminat, Tricalciumsilicat und/oder Dicalciumsilicat handeln. Calciumhydroxid und/oder Calciumoxid sind wegen ihrer starken alkalischen Eigenschaften bevorzugt. Vorzugsweise handelt es sich bei der wasserlöslichen Calciumverbindung nicht um ein Calciumsilicat. Die Silicate Calciumsilicat, Dicalciumsilicat und/oder Tricalciumsilicat sind wegen geringer Löslichkeit (insbesondere im Fall von Calciumsilicat) und aus wirtschaftlichen Gründen (Preis) (insbesondere im Fall von Dicalciumsilicat und Tricalciumsilicat) weniger bevorzugt. Weniger bevorzugt sind auch nicht so gut lösliche Calciumsalze wie beispielsweise Calciumcarbonat sowie Calciumsalze mit verzögernd wirkenden Anionen (z.B. können Citrat, Gluconat und Tartrat die Erhärtung von hydraulischen Bindemitteln verzögern). Im Fall von neutralen oder sauren Calciumsalzen (z.B. Calciumchlorid oder Calciumnitrat) verwendet man vorzugsweise eine geeignete Base zur Einstellung des pH-Werts auf alkalische Bedingungen (z.B. Lithiumhydroxid, Natriumhydroxid, Kaliumhydroxid, Ammoniak, Magnesiumhydroxid oder ein anderes Erdalkalihydroxid). Bevorzugt ist ein pH-Wert von mehr als 8, besonders bevorzugt mehr als 9 und ganz besonders bevorzugt mehr als 11. Der pH-Wert wird vorzugsweise bei 25°C und mit einem Feststoffgehalt der Suspension von 1 Gew.-% gemessen.

Es ist möglich, ein beliebiges Material, das Siliciumdioxid enthält, als siliciumdioxidhaltige Komponente einzusetzen, beispielsweise Mikrosilica, pyrogene Kieselsäure, gefällte Kieselsäure, Hochofenschlacke und/oder Quarzsand. Kleine Teilchengrößen des siliciumdioxidhaltigen Materials sind bevorzugt, insbesondere Teilchengrößen unter 1 µm. Ferner ist es möglich, Verbindungen zu verwenden, die in einer wässrig-alkalischen Umgebung zu Siliciumdioxid reagieren können, wie beispielsweise Tetraalkoxysilikatverbindungen der allgemeinen Formel Si(OR)₄. R kann gleich oder verschieden sein und beispielsweise aus einer verzweigten oder unverzweigten C₁- bis C₁₀-Alkylgruppe ausgewählt sein. Vorzugsweise ist R Methyl, besonders bevorzugt Ethyl.

In einer bevorzugten Ausführungsform ist die siliciumdioxidhaltige Verbindung aus der Gruppe Mikrosilica, pyrogene Kieselsäure, gefällte Kieselsäure, Hochofenschlacke und/oder Quarzsand ausgewählt. Bevorzugt sind Mikrosilica, pyrogene Kieselsäure und/oder gefällte Kieselsäure, insbesondere gefällte und/oder pyrogene Kieselsäure. Die oben aufgeführten Kieselsäuretypen sind in Ullmann's Encyclopedia of Industrial Chemistry, Wiley-VCH, Release 2009, 7. Auflage, DOI 10.1002/14356007.a23_583.pub3 definiert.

Es ist bevorzugt, auf die Reaktionsmischung mechanische Energie anzuwenden, vorzugsweise durch Mahlen, um die Reaktion des Calciumsalzes mit der üblicherweise wenig wasserlöslichen siliciumdioxidhaltigen Komponente zu aktivieren und/oder zu beschleunigen. Die mechanische Energie ist auch vorteilhaft, um die gewünschten kleinen Teilchengrößen der Calciumsilikathydrate zu erreichen. Das Wort "Mahlen" bedeutet in der vorliegenden Patentanmeldung ein beliebiges Verfahren, bei dem auf die Reaktionsmischung hohe Scherkräfte ausgeübt werden, um die Reaktion zu beschleunigen und eine geeignete Teilchengröße zu erhalten. Das Mahlen kann beispielsweise in einer Rührwerkskugelmühle in kontinuierlichem oder diskontinuierlichem Betriebsmodus durchgeführt werden. Alternativ dazu kann ein Ultradisperser verwendet werden, vorzugsweise mit einer Drehzahl von mehr als 5000 U/min. Es ist außerdem möglich, eine Schütteleinrichtung zu verwenden, in der kleine Mahlkörper, vorzugsweise mit einem Durchmesser von weniger als 1 mm, in einem Behälter mit der Reaktionsmischung zusammengebracht und geschüttelt werden. Die Schütteleinrichtung ist beispielsweise von der Firma Fast & Fluid erhältlich.

Mit den alkalischen Bedingungen ist ein pH-Wert des Verfahrens, der typischerweise höher als 9 ist, bezeichnet.

Vorzugsweise beträgt das Molverhältnis von Calcium aus der Calciumverbindung zu Silicium aus der siliciumdioxidhaltigen Komponente 0,6 bis 2, vorzugsweise 1,0 bis 1,5.

Typischerweise beträgt das Gewichtsverhältnis von Wasser zur Summe von Calciumverbindung und siliciumdioxidhaltiger Komponente 0,2 bis 50, vorzugsweise 2 bis 10 und ganz besonders bevorzugt 4 bis 6. In diesem Zusammenhand bedeutet Wasser das Wasser in der Reaktionsmischung, in dem das Verfahren durchgeführt wird. Vorzugsweise wird das Verfahren bei verhältnismäßig niedrigen Wassergehalten durchgeführt, um den Ausstoß des Verfahrens zu erhöhen. Dies erleichtert auch die Trocknung. Ein Verhältnis von 2 bis 10 bzw. 4 bis 6 ist besonders bevorzugt, da eine pastöse Konsistenz der Produkte erhalten werden kann, was für das Mahlverfahren bevorzugt ist.

In einer weiteren Ausführungsform der Erfindung wird die Umsetzung zumindest teilweise in Gegenwart einer wässrigen Lösung durchgeführt, welche ein viskositätserhöhendes Polymer aus der Gruppe der Polysaccharidderivate und/oder (Co)polymere mit einem mittleren Molekulargewicht Mw von mehr als 500.000 g/mol, besonders bevorzugt mehr als 1.000.000 g/mol, enthält, wobei die (Co)polymere Struktureinheiten enthalten, welche (vorzugsweise durch radikalische Polymerisation) von nichtionischen (Meth)acrylamidmonomer-Derivaten und/oder Sulfonsäuremonomer-Derivaten abgeleitet sind. Die erfindungsgemäßen Additive enthalten also gegebenenfalls derartige viskositätserhöhende Polymere. Das viskositätserhöhende Polymer kann zu Beginn, während des Verfahrens oder am Ende des Verfahrens zugegeben werden. So kann es beispielsweise zu der wässrigen Lösung des Kammpolymers, zu der Calciumverbindung und/oder der Silikatverbindung gegeben werden. Das viskositätserhöhende Polymer kann auch während des Verfahrens der Herstellung einer Erhärtungsbeschleunigerzusammensetzung durch Umsetzung einer Calciumverbindung, vorzugsweise eines Calciumsalzes, ganz besonders bevorzugt eines wasserlöslichen Calciumsalzes, mit einer siliziumdioxidhaltigen Komponente eingesetzt werden. Vorzugsweise wird das viskositätserhöhende Polymer nach Abschluss der Reaktion (nach Abschluss der Zugabe der Reaktionspartner) zugegeben, damit eine Destabilisierung von Teilchen verhindert und die beste Stabilität beibehalten wird. Das viskositätserhöhende Mittel hat insofern eine stabilisierende Funktion, als Segregation (Aggregation und Sedimentation) von beispielsweise Calciumsilikathydrat verhindert werden kann. Vorzugsweise werden die viskositätserhöhenden Mittel in einer Dosierung von 0,001 bis 10 Gew.-% und besonders bevorzugt 0,001 bis 1 Gew.-%, bezogen auf das Gewicht der Erhärtungsbeschleunigersuspension, eingesetzt. Das viskositätserhöhende Polymer sollte vorzugsweise so dosiert werden, dass sich eine plastische Viskosität der Erhärtungsbeschleunigersuspensionen von mehr als 80 mPa·s ergibt.

Als Polysaccharidderivat sind Celluloseether bevorzugt, beispielsweise Alkylcellulosen wie Methylzellulose, Ethylzellulose, Propylzellulose und Methylethylzellulose, Hydroxyalkylzellulosen wie Hydroxyethylzellulose (HEC), Hydroxypropylzellulose (HPC) und Hydroxyethylhydroxypropylzellulose, Alkylhydroxyalkylzellulosen wie Methylhydroxyethylzelluose (MHEC), Methylhydroxypropylzelluose (MHPC) und Propylhydroxypropylzellulose. Bevorzugt sind die Zelluloseetherderivate Methylzellulose (MC), Hydroxypropylzellulose (HPC), Hydroxyethylzellulose (HEC) und Ethylhydroxyethylzellulose (EHEC), und besonders bevorzugt sind Methylhydroxyethylzelluose (MHEC) und Methylhydroxypropylzelluose (MHPC). Die obigen Zelluloseetherderivate, die jeweils durch entsprechende Alkylierung und Alkoxylierung von Zellulose erhältlich sind, liegen vorzugsweise als nichtionische Strukturen vor, aber es wäre auch möglich, beispielsweise Carboxymethylzellulose (CMC) zu verwenden. Bevorzugt ist außerdem die Verwendung von nichtionischen Stärkeetherderivaten wie Hydroxypropylstärke, Hydroxyethylstärke und Methylhydroxypropylstärke. Bevorzugt ist Hydroxypropylstärke. Bevorzugt sind auch mikrobiell hergestellte Polysaccharide wie Welan Gum und/oder Xanthane und natürlich vorkommende Polysaccharide wie Alginate, Carrageenane und Galactomannane. Diese können aus entsprechenden Naturprodukten durch extraktive Verfahren gewonnen werden, wie beispielsweise im Fall von Alginaten und Carrageenanen aus Algen, im Fall von Galactomannanen aus Johannesbrotbaumkernen.

Die viskositätserhöhenden (Co)polymere mit einem gewichtsmittleren Molekulargewicht MW von mehr als 500.000 g/mol, besonders bevorzugt mehr als 1.000.000 g/mol können (vorzugsweise durch radikalische Polymerisation) aus nichtionischen (Meth)acrylamidmonomer-Derivaten und/oder Sulfonsäuremonomer-Derivaten hergestellt werden. Die jeweiligen Monomere können beispielsweise aus der Gruppe Acrylamid, vorzugsweise Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tert.-Butylacrylamid und/oder Sulfonsäuremonomer-Derivaten aus der Gruppe Styrolsulfonsäure, 2-Acrylamido-2-methylpropansulfonsäure, 2-Methacrylamido-2-methylpropansulfonsäure, 2-Acrylamidobutansulfonsäure und/oder 2-Acrylamido-2,4,4-trimethylpentansulfonsäure oder den Salzen der genannten Säuren ausgewählt werden. Vorzugsweise enthält das viskositätserhöhende Mittel mehr als 50 mol-% und besonders bevorzugt mehr als 70 mol-% Struktureinheiten, die sich von nichtionischen (Meth)acrylamidmonomer-Derivaten und/oder Sulfonsäuremonomer-Derivaten ableiten. Andere Struktureinheiten, die vorzugsweise in den Copolymeren enthalten sind, können sich beispielsweise von den Monomeren (Meth)acrylsäure, Estern von (Meth)acrylsäuren mit verzweigten oder unverzweigten C₁- bis C₁₀-Alkoholen, Vinylacetat, Vinylpropionat und/oder Styrol ableiten.

In einer weiteren Ausführungsform der Erfindung handelt es sich bei dem viskositätserhöhenden Polymer um ein Polysaccharidderivat aus der Gruppe Methylzellulose, Hydroxyethylzellulose (HEC), Hydroxypropylzellulose (HPC), Methylhydroxyethylzellulose (MHEC), Methylhydroxypropylzellulose (MHPC) und/oder (Co)polymere mit einem gewichtsmittleren Molekulargewicht Mw von mehr als 500.000 g/mol, besonders bevorzugt mehr als 1.000.000 g/mol, wobei die (Co)polymere Struktureinheiten enthalten, die sich (vorzugsweise durch radikalische Polymerisation) von nichtionischen (Meth)acrylamidmonomer-Derivaten aus der Gruppe Acrylamid, vorzugsweise Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tert.-Butylacrylamid und/oder Sulfonsäuremonomer-Derivaten aus der Gruppe 2-Acrylamido-2-methylpropansulfonsäure, 2-Methacrylamido-2-methylpropansulfonsäure, 2-Acrylamidobutansulfonsäure und/oder 2-Acrylamido-2,4,4-trimethylpentansulfonsäure oder den Salzen der genannten Säuren ableiten.

In der Gruppe der nichtionischen (Meth)acrylamidmonomer-Derivate sind Methylacrylamid, N,N-Dimethylacrylamid und/oder Methacrylamid bevorzugt, und Acrylamid ist ganz besonders bevorzugt. In der Gruppe der Sulfonsäuremonomere sind 2-Acrylamido-2-methylpropansulfonsäure (AMPS) und deren Salze bevorzugt. Die viskositätserhöhenden Polymere können zu Beginn des Verfahrens oder zu jedem anderen Zeitpunkt zugegeben werden.

Vorzugsweise wird das erfindungsgemäße Verfahren am Ort einer Betonherstellung (beispielsweise einer Transportbeton- oder Fertigbetonanlage oder einer anderen Anlage, in der Mörtel, Beton oder andere Zementprodukte hergestellt werden) durchgeführt, wobei das erhaltene Additiv als Anmachwasser oder als Teil des Anmachwassers verwendet werden kann.

Anmachwasser ist in diesem Zusammenhang das Wasser, das bei der Betonherstellung oder der Herstellung ähnlicher zementartiger Materialien verwendet wird. Typischerweise wird das Anmachwasser in einer Transportbetonanlage oder Fertigbetonanlage, auf einer Baustelle oder an einem anderen Ort, an dem Beton oder andere zementartige Materialien hergestellt werden, mit Zement und beispielsweise Zuschlägen gemischt. Das Anmachwasser kann in der Regel eine breite Palette von Additiven enthalten, wie beispielsweise Fließmittel, Erhärtungsbeschleuniger, Verzögerer, schwindungsverringernde Additive, Luftporenbildner und/oder Entschäumer.

Eine hohe Verdünnung der Suspension ist für die Wirksamkeit des erfindungsgemäßen Additivs vorteilhaft.

Deshalb ist eine bevorzugte Variante des erfindungsgemäßen Verfahrens A), die vorzugsweise am Ort einer Betonherstellung (beispielsweise einer Transportbeton- oder Fertigbetonanlage) durchgeführt wird, ist dadurch gekennzeichnet, dass das Gewichtsverhältnis der Summe des wasserlöslichen Sulfonsäuresalzes des Calciums, der wasserlöslichen anorganischen Silikatverbindung und des Dispergiermittels zu Wasser, vorzugsweise zu Anmachwasser, zwischen 1/1000 und 1/10 und besonders bevorzugt zwischen 1/500 und 1/100 liegt.

Deshalb ist eine bevorzugte Variante des erfindungsgemäßen Verfahrens B), die vorzugsweise am Ort einer Betonherstellung (beispielsweise einer Transportbeton- oder Fertigbetonanlage) durchgeführt wird, ist dadurch gekennzeichnet, dass das Gewichtsverhältnis der Summe der wasserlöslichen Calciumverbindung, der wasserlöslichen anorganischen Silikatverbindung, des Dispergiermittels und des wasserlöslichen Sulfonsäuresalzes zu Wasser, vorzugsweise zu Anmachwasser, zwischen 1/1000 und 1/10 und besonders bevorzugt zwischen 1/500 und 1/100 liegt.

In einer weiteren Ausführungsform des Verfahrens wird das Additiv zumindest teilweise in Gegenwart einer wässrigen Lösung hergestellt, die Erhärtungsbeschleuniger aus der Gruppe der Alkanolamine, vorzugsweise Triisopropanolamin und/oder Tetrahydroxyethylethylendiamin (THEED), enthält. Vorzugsweise werden die Alkanolamine in einer Dosierung von 0,01 bis 2,5 Gew.-%, bezogen auf das Gewicht des hydraulischen Bindemittels, vorzugsweise Zement, verwendet. Bei Verwendung von Aminen, insbesondere Triisopropanolamin und Tetrahydroxyethylethylendiamin, könnten sie synergistische Effekte bezüglich der Frühfestigkeitsentwicklung von hydraulischen Bindemittelsystemen, insbesondere zementartigen Systemen, ergeben. Vorzugsweise wird das Amin nach Abschluss der Reaktion zugegeben.

In einer bevorzugten Verfahrensvariante wird das Additiv für hydraulisch abbindende Massen getrocknet, vorzugsweise durch Sprühtrocknung. Die Trocknungsmethode unterliegt keinen besonderen Einschränkungen. Die Trocknung kann auch in einem Wirbelschichttrockner erfolgen. Es ist allgemein bekannt, dass Wasser auch in geringen Mengen aufgrund von unerwünschten vorzeitigen Hydratationsprozessen für zahlreiche Bindemittel, insbesondere Zement, schädlich ist. Pulverprodukte mit ihrem typischerweise sehr niedrigen Wassergehalt sind im Vergleich zu wässrigen Systemen vorteilhaft, da sie in Zement und/oder andere Bindemittel wie Gips, Calciumsulfat-Hemihydrat (Bassanit), wasserfreies Calciumsulfat, Schlacken, vorzugsweise zerkleinerte granulierte Hochofenschlacke, Flugasche, Silikamehl, Metakaolin, natürliche Puzzolane, calcinierten Ölschiefer, Calciumsulfoaluminatzement und/oder Calciumaluminatzement eingemischt werden können.

Die Erfindung betrifft auch Additive, die nach den erfindungsgemäßen Verfahren erhältlich sind.

Die Erfindung umfasst die Verwendung des erfindungsgemäßen Additivs in Baustoffmischungen, enthaltend Zement, Gips, Anhydrit, Schlacke, vorzugsweise zerkleinerte granulierte Hochofenschlacke, Flugasche, Silikamehl, Metakaolin, natürliche Puzzolane, Calcinierten Ölschiefer, Calciumsulfoaluminatzement und/oder Calciumaluminatzement, vorzugsweise in Baustoffmischungen, die überwiegend Zement als hydraulisches Bindemittel enthalten. Gips umfasst in diesem Zusammenhang alle möglichen Calciumsulfatträger mit verschiedenen Mengen an Kristallwassermolekülen, wie beispielsweise auch Calciumsulfat-Hemihydrat.

Die erfindungsgemäßen Additive bewirken überraschenderweise eine gesteigerte Frühfestigkeit, insbesondere nach 6h. Durch die gesteigerte Frühfestigkeitsentwicklung wird ein frühzeitiges Ausschalen von Betonkörpern im ready-mix Betonbereich und im precast Betonbereich ermöglicht, was kürzere Produktionszyklen erlaubt.

Die vorliegende Erfindung betrifft auch die Verwendung der erfindungsgemäßen Additive als Mahlhilfsmittel bei der Herstellung von (Portland)zement, Schlacke, Flugasche, Kalk, Puzzolane oder einer Mischung daraus, bevorzugt für (Portland)zement verwendet werden. Die erfindungsgemäßen Additive können bei Erdöl- und Erdgasbohrungen, insbesondere bei der Erschließung, Ausbeutung und Komplettierung unterirdischer Erdöl- und Erdgaslagerstätten sowie bei Tiefbohrungen verwendet werden. Die Additive dienen dabei als Abbindebeschleuniger für anorganische Bindemittel, insbesondere zur Beschleunigung des Abbindens der Zementschlämme bei der Bohrlochzementierung von Erdöl- und Erdgasbohrungen.

Als anorganische Bindemittel, deren Abbinden erfindungsgemäß beschleunigt wird, eignen sich vorzugsweise Portlandzemente, Calciumaluminat-Zemente, Gips, Anhydrit, Hochofenschlacke, Hüttensande, Flugaschen, Silica-Staub, Metakaolin, natürliche und künstliche Puzzolane und/oder gebrannte Ölschiefer, vorzugsweise Portlandzemente.

Die Verwendung der Abbindebeschleuniger-Zusammensetzung erfolgt vorteilhaft zusammen mit anderen bei der Bohrlochzementierung gebräuchlichen Additiven, insbesondere Fließmitteln, Wasserretentionsmitteln und/oder rheologiemodifizierenden Additiven. Die Erfindung betrifft auch Baustoffmischungen, die eine Zusammensetzung, vorzugsweise eine wässrige Erhärtungsbeschleunigersuspension, gemäß der vorliegenden Erfindung und Zement, Gips, Anhydrit, Schlacke, vorzugsweise zerkleinerte granulierte Hochofenschlacke, Flugasche, Silikamehl, Metakaolin, natürliche Puzzolane, calcinierten Ölschiefer, Calciumsulfoaluminatzement und/oder Calciumaluminatzement enthalten. Vorzugsweise enthalten die Baustoffmischungen überwiegend Zement als hydraulisches Bindemittel. Die Erhärtungsbeschleunigerzusammensetzung ist in der Baustoffmischung vorzugsweise in einer Dosierung von 0,05 Gew.-% bis 5 Gew.-%, bezogen auf das Klinkergewicht, enthalten.

Zur Illustration kann der Begriff Baustoffmischungen Mischungen in trockener oder wässriger Form und im gehärteten oder plastischen Zustand bedeuten. Trockene Baustoffmischungen können beispielsweise Mischungen der genannten Bindemittel, vorzugsweise Zement, und der erfindungsgemäßen Erhärtungsbeschleunigerzusammensetzungen (vorzugsweise in Pulverform) sein. Mischungen in wässriger Form, in der Regel in Form von Aufschlämmungen, Pasten, Frischmörtel oder Frischbeton, werden durch Zugabe von Wasser zu der Bindemittelkomponente bzw. den Bindemittelkomponenten und der Erhärtungsbeschleunigerzusammensetzung hergestellt; sie gehen dann vom plastischen in den gehärteten Zustand über.

Die Erfindung wird durch die beigefügte Figur und die nachfolgenden Beispiele näher veranschaulicht.

Figur 1 zeigt den Wärmefluss des abbindenden Zements (A) bei Verwendung der Härtungsbeschleunigersuspension H1 (Zugabe von 0,6 Gew.-% der Suspension, Feststoff bezogen auf die Masse Zement) und H2 (Zugabe von 0,6 Gew.-% der Suspension, Feststoff bezogen auf die Masse Zement). t - Zeit in h, HF - Spezifischer Wärmefluss in mW/g_{Zement}

Für die Herstellung der Härtungsbeschleunigersuspensionen werden folgende Polymere eingesetzt:

### Polymer 1

Polymer 1 ist ein Kammpolymer und basiert auf den Monomeren Maleinsäure, Acrylsäure und Vinyloxybutylpolyethyleneglykol - 5800. Das molare Verhältnis von Acrylsäure zu Maleinsäure beträgt 7. Mw = 40.000 g/mol und wurde über GPC bestimmt. Der Feststoffgehalt beträgt 45 Gew. %. Die Synthese ist zum Beispiel in EP0894811 beschrieben. Die Ladungsdichte ist 930 µeq/g.

### Polymer 2

Das Kammpolymer Polymer 2 ist ein Kondensat aus den Bausteinen PhenolPEG5000 und Phenoxyethanolphosphat. Das Molekulargewicht beträgt 23.000 g/mol. Die Synthese ist beschrieben in DE102004050395. Der Feststoffgehalt ist 31%. Die Ladungsdichte ist 745 µeq/g.

### Polymer 3

Polymer 3 ist ein Kammpolymer und basiert auf den Monomeren Acrylsäure und Vinyloxybutylpolyethyleneglykol - 3000. Mw = 23.000 g/mol und wurde über GPC bestimmt. Der Feststoffgehalt beträgt 52 Gew. %. Die Ladungsdichte ist 1410 µeq/g.

### Beispiele zur Verwendung von Sulfonsäuresalzen als Trocknungshilfsmittel:

### Beispiel 1

### Herstellung der Härtungsbeschleunigersuspension H1 (nicht erfindungsgemäß)

Durch Einwaage von 600 g Ca(OH)₂ (Reinheit 92 %) und 488 g Ca(CH₃COO⁻)₂ (Reinheit 100 %) in 4,328 Kg H₂O wurde eine Calciumquelle hergestellt. Durch Einwaage von 2,28 Kg Natriumwasserglas (Feststoffgehalt = 36,1 Gew.-%) mit einem Molverhältnis SiO₂/Na₂O von 3,4 in 1,15 Kg H₂O wurde eine Silikatquelle hergestellt. Durch Einwaage von 2,268 Kg Polymer 3 (35 Gew.-%ige Polymerlösung) und 0,523 Kg Polymer 2 (35 Gew.-%ige Polymerlösung) in 8,36 Kg H₂O wurde eine Dispergiermittellösung hergestellt. Die Dispergiermittellösung wurde vorgelegt und durch einen Hochenergiemischer, der mit Rotor/Stator-System ausgestattet ist, im Kreis gepumpt. Im Hochenergiemischer werden die Calciumquelle, die zur Vermeidung von Sedimentation gerührt wird, und die Silikatquelle bei einer Umdrehungsgeschwindigkeit des Rotor/Stator-Systems von 8000 rpm innerhalb von 80 Minuten vollständig in die Vorlagelösung dosiert. Die Vorlage wird dabei auf 20 °C gehalten.
Der Feststoffgehalt von H1 beträgt 14,7 Gew.-%, welcher durch Trocknung bei 60 °C im Umlufttrockenschrank bis zur Gewichtskostanz ermittelt wird.

Einfluss der Härtungsbeschleunigersuspensionen auf die Härtung (nicht erfindungsgemäß). Der Einfluss der Härtungsbeschleunigersuspensionen H1 auf die Härtung wurde an dem Zement (CEM I Milke 52.5 R) durch Messung der Wärmefreisetzung unter Anwendung von Wärmeflusskalorimetrie geprüft (Figur 1). Die Härtungsbeschleunigersuspension wurde mit dem Anmachwasser vermischt, wonach die erhaltene Suspension mit 20 g des Zements gemischt wurde. Der Wasserzementwert (w/c) wurde auf 0,32 eingestellt. Die Dosierung des zu prüfenden Beschleunigers war 0,6 Gew.-% Feststoffgehalt H1, bezogen auf das Zementgewicht. Die Wärmeflusskurven sind in Figur 1 wiedergegeben. Der Zusatz der Härtungsbeschleunigersuspension beschleunigt die Härtung (definiert in H. F. W. Taylor (1997): Cement Chemistry, 2. Auflage, S. 212ff). Der Effekt ist in Tabelle 1 zusammengefasst.
Die Referenz repräsentiert den Wärmefluss von CEM I Milke 52.5 R ohne Zugabe eines Beschleunigers, die Kurve 2 zeigt den Wärmefluss für CEM I Milke 52.5 R mit Zusatz von 0,6 Gew.-% der Härtungsbeschleunigersuspension H1.

**Tabelle 1: Wärmefluss im Haupthydratationszeitraum gemäß Figur 1.**

| Probe | kumulierte Hydratationswärme nach 6 h (J/g) | Beschleunigung gegenüber Referenz (%) |
|---|---|---|
| CEM I Milke 52.5 R ohne Beschleuniger | 40,7 | - |
| mit 0.6 Gew.-% Suspension H1 | 96,0 | 236 |

### Beispiel 2

Herstellung getrockneter Härtungsbeschleuniger.

Härtungsbeschleunigersuspension H1 wurde mit Trocknungshilfsmitteln versetzt und getrocknet. Die Trocknung erfolgte durch Sprühtrocknung, wobei das Trocknungshilfsmittel vor dem Trocknungsvorgang ca. 5 Minuten mit der Härtungsbeschleunigersuspension H1 vermischt wurde. Die für die Sprühtrocknung eingewogenen Mengen der Härtungsbeschleunigersuspension H1 und die verwendeten Mengen der jeweiligen Trocknungshilfsmittel sind in Tabelle 2 dargestellt. Bei den Vergleichsbeispielen TH1-e bis TH1-h wird Calciumchlorid als Trocknungshilfsmittel verwendet, welches auf Grund der Korrosionsgefahr nachteilig ist.Tabelle 2: Herstellung getrockneter Härtungsbeschleuniger (TH1-a bis TH1-h sind nicht erfindungsgemäße Vergleichsbeispiele)

| Pulver | Einwaage H1 [g] | Trocknungshilfsmittel | Einwaage Additiv [g] | Trocknertemp. Ausgang [°C] |
|---|---|---|---|---|
| TH1-a | 500 | - | - | 60 |
| TH1-b | 500 | - | - | 80 |
| TH1-c | 500 | - | - | 100 |
| TH1-d | 500 | - | - | 120 |
| TH1-e | 500 | CaCl₂ | 10.8 | 60 |
| TH1-f | 500 | CaCl₂ | 10.8 | 80 |
| TH1-g | 500 | CaCl₂ | 10.8 | 100 |
| TH1-h | 500 | CaCl₂ | 10.8 | 120 |
| TH1-m | 542.6 | NaSO₃CH₃ | 38.0 | 80 |
| TH1-n | 654.0 | Ca(SO₃CH₃)₂ | 45.8 | 80 |
| TH1-o | 620.8 | NaSO₃NH₂ | 43.5 | 80 |
| TH1-p | 609.8 | Ca(SO₃NH₂)₂ | 42.7 | 80 |
| TH1-q | 631.8 | Ca(SO₃NH₂)₂ | 33.2 | 80 |
| TH1-r | 567.0 | Ca(SO₃NH₂)₂ | 59.5 | 80 |
| TH1-s | 670.0 | Ca(SO₃NH₂)₂ | 46.9 | 100 |
| TH1-t | 615.4 | Ca(SO₃NH₂)₂ | 43.1 | 110 |

### Beispiel 3

### Einfluss getrockneter Härtungsbeschleuniger auf die Erhärtung

Der Einfluss der bei der Trocknung erhaltenen Härtungsbeschleuniger auf die Härtung wurde an dem Zement (CEM I Milke 52.5 R) durch Messung der Wärmefreisetzung unter Anwendung der Wärmeflusskalorimetrie geprüft. Der Härtungsbeschleuniger wurde mit dem Anmachwasser vermischt, wonach die erhaltene Suspension mit 20 g des Zements gemischt wurde. Der Wasserzementwert (w/c) wurde auf 0,32 eingestellt. Die Dosierung der zu prüfenden Beschleuniger in der Tabelle 3 wurde so gewählt, dass immer die gleiche Menge des Feststoffes von H1, d.h. 0,6 Gew.-%, bezogen auf den Zement eingesetzt wurde. Je nach Zugabe des erfindungsgemäßen Trocknungshilfsmittels variiert dabei die absolut eingesetzte Menge des erfindungsgemäßen Beschleunigers, wobei die Menge des Feststoffes von H1 bezogen auf den Zement, wie vorstehend beschrieben, konstant gehalten wurde. Der Zusatz des erfindungsgemäßen Additivs beschleunigt die Härtung (definiert in H. F. W. Taylor (1997): Cement Chemistry, 2. Auflage, S. 212ff). Die Beschleunigungsfaktoren sind in Tabelle 3 zusammengefasst.

**Tabelle 3: Getrocknete Härtungsbeschleuniger, Wärmefluss im Haupthydratationszeitraum (TH1-a bis TH1-h sind nicht erfindungsgemäße Vergleichsbeispiele)**

| Probe | kumulierte Hydratationswärme nach 6 h (J/g) | Beschleunigung gegenüber Referenz (%) |
|---|---|---|
| CEM I Milke 52.5 R + 0.6 Gew.-% TH1-a | 53,7 | 132 |
| CEM I Milke 52.5 R + 0.6 Gew.-% TH1-b | 60,2 | 148 |
| CEM I Milke 52.5 R + 0.6 Gew.-% TH1-c | 58,6 | 144 |
| CEM I Milke 52.5 R + 0.6 Gew.-% TH1-d | 56,2 | 138 |
| CEM I Milke 52.5 R + 0.7 Gew.-% TH1-e | 86,2 | 212 |
| CEM I Milke 52.5 R + 0.7 Gew.-% TH1-f | 88,3 | 217 |
| CEM I Milke 52.5 R + 0.7 Gew.-% TH1-g | 86,3 | 212 |
| CEM I Milke 52.5 R + 0.7 Gew.-% TH1-h | 82,6 | 203 |
| CEM I Milke 52.5 R + 0.93 Gew.-% TH1-m | 75,0 | 184 |
| CEM I Milke 52.5 R + 0.93 Gew.-% TH1-n | 81,6 | 200 |
| CEM I Milke 52.5 R + 0.93 Gew.-% TH1-o | 81.0 | 200 |
| CEM I Milke 52.5 R + 0.93 Gew.-% TH1-p | 88,1 | 217 |
| CEM I Milke 52.5 R + 0.84 Gew.-% TH1-q | 81.8 | 201 |
| CEM I Milke 52.5 R + 1.07 Gew.-% TH1-r | 87,2 | 214 |
| CEM I Milke 52.5 R + 0.93 Gew.-% TH1-s | 79,9 | 196 |
| CEM I Milke 52.5 R + 0.93 Gew.-% TH1-t | 83,8 | 206 |

### Beispiele zur Verwendung von wasserlöslichen Sulfonsäuresalzen des Calciums zur Herstellung von Calciumsilikathydratpartikeln

### Beispiel 4 (erfindungsgemäß)

### Herstellung der Härtungsbeschleunigersuspension H2

Durch Auflösen von 122 g Amidoschwefelsäure (Reinheit 100 %) in 288,7 g H₂O und anschließende langsame Zugabe von 46,7 g Ca(OH)₂ (Reinheit 95 %) wurde eine Calciumquelle hergestellt. Durch Lösen von 104,9 g Natriummetasilikat-Pentahydrat (Reinheit 99 %) in 109,7 g H₂O wurde eine Silikatquelle hergestellt. Durch Einwaage von 82,8 g einer Lösung von Polymer 1 (45 Gew.-%ige Polymerlösung) und 245,1 g H₂O wurde eine Dispergiermittellösung hergestellt. Die Dispergiermittellösung wurde vorgelegt und durch einen Hochenergiemischer mit 20 ml Mischvolumen, der mit Rotor/Stator-System ausgestattet ist, im Kreis gepumpt. Im Hochenergiemischer werden die Calciumquelle und die Silikatquelle bei einer Umdrehungsgeschwindigkeit des Rotor/Stator-Systems von 8000 rpm innerhalb von 80 Minuten vollständig in die Vorlagelösung dosiert. Die Vorlage wird dabei auf 20 °C gehalten.

### Herstellung der Härtungsbeschleunigersuspension H3 (erfindungsgemäß)

Durch Auflösen von 173,3 g Methansulfonsäure (Reinheit 100 %) in 236,7 g H₂O und anschließende langsame Zugabe von 46,7 g Ca(OH)₂ (Reinheit 95 %) wurde eine Calciumquelle hergestellt. Durch Lösen von 104,9 g Natriummetasilikat-Pentahydrat (Reinheit 99 %) in 109,7 g H₂O wurde eine Silikatquelle hergestellt. Durch Einwaage von 101,9 g einer Lösung von Polymer 1 (45 Gew.-%ige Polymerlösung), 26,3 g einer Lösung von Polymer 2 (35 Gew.-%ige Polymerlösung) und 200,3 g Wasser wurde eine Dispergiermittellösung hergestellt. Die Dispergiermittellösung wurde vorgelegt und durch einen Hochenergiemischer mit 20 ml Mischvolumen, der mit Rotor/Stator-System ausgestattet ist, im Kreis gepumpt. Im Hochenergiemischer werden die Calciumquelle und die Silikatquelle bei einer Umdrehungsgeschwindigkeit des Rotor/Stator-Systems von 8000 rpm innerhalb von 80 Minuten vollständig in die Vorlagelösung dosiert. Die Vorlage wird dabei auf einer Temperatur von 20 °C gehalten.

### Trocknung der Härtungsbeschleunigersuspension H2 und H3 (erfindungsgemäß)

Die Härtungsbeschleunigersuspensionen H2 und H3 wurde ohne Zugabe eines Trocknungshilfsmittels bei 80 °C Ausgangstemperatur durch Sprühtrocknung getrocknet. Dabei entstand aus der Suspension H2 der getrocknete Härtungsbeschleuniger T2 und analog aus H3 entstand der getrocknete Härtungsbeschleuniger T3.

Einfluss der Härtungsbeschleunigersuspension H2 und H3 und des getrockneten Härtungsbeschleunigers T2 und T3 auf die Härtung zementärer Systeme.
Der Einfluss des bei der Trocknung erhaltenen Härtungsbeschleunigers T2 und T3 auf die Härtung wurde an dem Zement CEM I Milke 52.5 R durch Messung der Wärmefreisetzung unter Anwendung der Wärmeflusskalorimetrie geprüft. Der Härtungsbeschleuniger wurde mit dem Anmachwasser vermischt, wonach die erhaltene Suspension mit 20 g des Zements gemischt wurde. Der Wasserzementwert (w/c) wurde auf 0,32 eingestellt. Die Dosierung der zu prüfenden Beschleuniger wurde so gewählt, dass immer die gleiche Menge des Feststoffes von H2 und H3, d.h. 0,6 Gew.-%, bezogen auf den Zement eingesetzt wurde. Der Zusatz des erfindungsgemäßen Additivs beschleunigt die Härtung (definiert in H. F. W. Taylor (1997): Cement Chemistry, 2. Auflage, S. 212ff). Der Effekt ist in Tabelle 4 zusammengefasst.

**Tabelle 4: Härtungsbeschleuniger H2 und H3 sowie getrockneter Härtungsbeschleuniger T2 und T3, Vergleich der Hydratationswärmen nach 6 h**

| Pulver | kumulierte Hydratationswärme nach 6 h (J/g) | Beschleunigung gegenüber Referenz (%) |
|---|---|---|
| CEM I Milke 52.5 R (Referenz) | 36,6 | - |
| CEM I Milke 52.5 R + 0.6 Gew.-% H2 | 93,5 | 255 |
| CEM I Milke 52.5 R + 0.6 Gew.-% T2 | 80,8 | 221 |
| CEM I Milke 52.5 R + 0.6 Gew.-% H3 | 90,2 | 246 |
| CEM I Milke 52.5 R + 0.6 Gew.-% T3 | 85,2 | 233 |

## Patentansprüche

1. Additiv für hydraulisch abbindende Massen, umfassend
a) mindestens ein polymeres Dispergiermittel, das Struktureinheiten mit anionischen oder anionogenen Gruppen und Struktureinheiten mit Polyetherseitenketten umfasst,
b) mindestens eine Sulfonsäureverbindung der Formel (I) 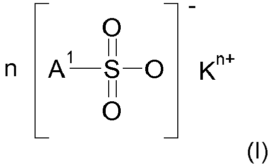 worin
A¹ für NH₂, NHMe, NMe₂, N(CH₂-CH₂-OH)₂, CH₃, C₂H₅, CH₂-CH₂-OH, Phenyl oder p-CH₃-Phenyl, steht und
Kⁿ⁺ für ein Alkalimetallkation oder ein Kation steht, das ausgewählt ist unter Ca²⁺, Mg²⁺, Sr²⁺, Ba²⁺, Zn²⁺, Fe²⁺, Fe³⁺, Al³⁺, Mn²⁺, oder Cu²⁺ und
n für die Wertigkeit des Kations steht; und
c) Calciumsilikathydratpartikel,
wobei das polymere Dispergiermittel als anionische oder anionogene Gruppe mindestens eine Struktureinheit der allgemeinen Formeln (Ia), (Ib), (Ic) und/oder (Id) aufweist: 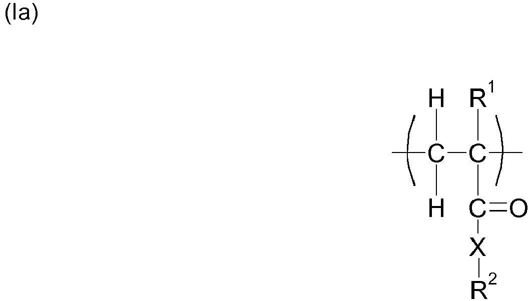 worin
R¹ für H oder eine unverzweigte oder verzweigte C₁-C₄-Alkylgruppe, CH₂COOH oder CH₂CO-X-R³ steht;
X für NH-(CₙH₂ₙ) oder O-(CₙH₂ₙ) mit n = 1, 2, 3 oder 4 oder für eine chemische Bindung steht, wobei das Stickstoffatom bzw. das Sauerstoffatom an die CO-Gruppe gebunden ist;
R² für OM, PO₃M₂, oder O-PO₃M₂ steht; mit der Maßgabe, dass X für eine chemische Bindung steht, wenn R² für OM steht;
R³ für PO₃M₂, oder O-PO₃M₂ steht; 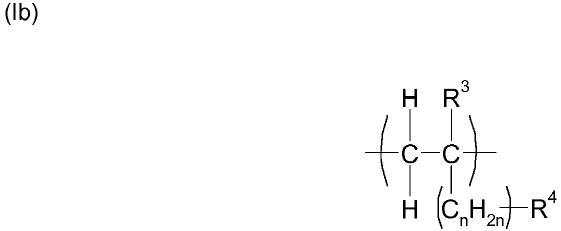 worin
R³ für H oder eine unverzweigte oder verzweigte C₁-C₄-Alkylgruppe steht;
n für 0, 1, 2, 3 oder 4 steht;
R⁴ für PO₃M₂, oder O-PO₃M₂ steht; 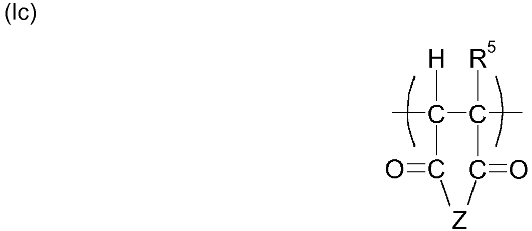
worin
R⁵ für H oder eine unverzweigte oder verzweigte C₁-C₄-Alkylgruppe steht;
Z für O oder NR⁷ steht; und
R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
n für 1, 2, 3 oder 4 steht; 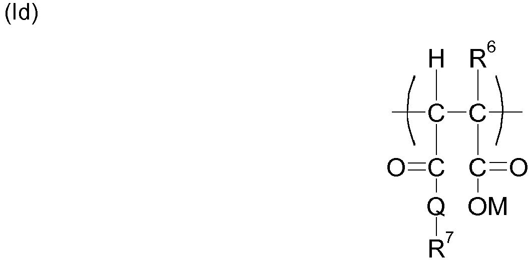 worin
R⁶ für H oder eine unverzweigte oder verzweigte C₁-C₄-Alkylgruppe steht;
Q für NR⁷ oder O steht;
R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
n für 1, 2, 3 oder 4 steht; und
wobei jedes M unabhängig voneinander für H oder ein Kationäquivalent steht,
und als Polyetherseitenkette mindestens eine Struktureinheit der allgemeinen Formeln (IIa) und/oder (IIb) aufweist: 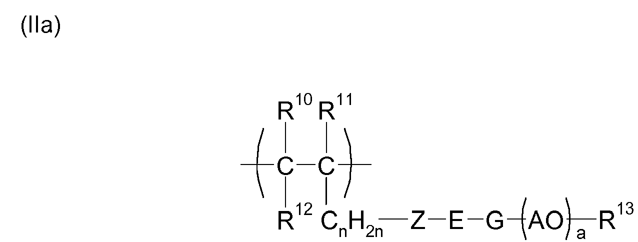 worin
R¹⁰, R¹¹ und R¹² unabhängig voneinander für H oder eine unverzweigte oder verzweigte C₁-C₄-Alkylgruppe stehen;
Z für O oder S steht;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
G für O, NH oder CO-NH steht; oder
E und G gemeinsam für eine chemische Bindung stehen;
A für CₓH₂ₓ mit x = 2, 3, 4 oder 5 oder CH₂CH(C₆H₅) steht;
n für 0, 1, 2, 3, 4 und/oder 5 steht;
a für eine ganze Zahl von 2 bis 350 steht;
R¹³ für H, eine unverzweigte oder verzweigte C₁-C₄-Alkylgruppe, CO-NH₂ und/oder COCH₃ steht; 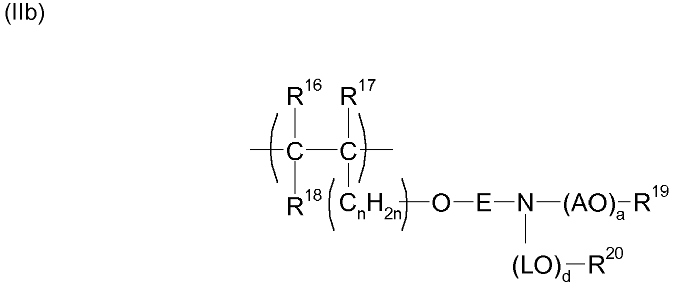 worin
R¹⁶, R¹⁷ und R¹⁸ unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
A für CₓH₂ₓ mit x = 2, 3, 4 oder 5 oder CH₂CH(C₆H₅) steht;
L für CₓH₂ₓ mit x = 2, 3, 4 oder 5 oder CH₂-CH(C₆H₅) steht;
a für eine ganze Zahl von 2 bis 350 steht;
d für eine ganze Zahl von 1 bis 350 steht;
R¹⁹ für H oder eine unverzweigte oder verzweigte C₁-C₄-Alkylgruppe steht;
R²⁰ für H oder eine unverzweigte oder verzweigte C₁-C₄-Alkylgruppe steht; und
n für 0, 1, 2, 3, 4 oder 5 steht; oder
wobei das polymere Dispergiermittel mindestens ein Polymer umfasst, das ein Polykondensationsprodukt ist, welches Struktureinheiten (III) und (IV) umfasst: 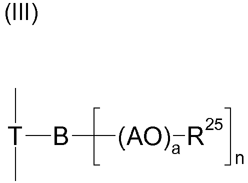 worin
T für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für CₓH₂ₓ mit x = 2, 3, 4 oder 5 oder CH₂CH(C₆H₅) steht;
a für eine ganze Zahl von 1 bis 300 steht;
R²⁵ für H, einen verzweigten oder unverzweigten C₁- bis C₁₀-Alkylrest, C₅- bis C₈-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb): 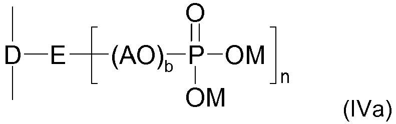 worin
D für einen substituierten oder unsubstituierten Phenylrest,einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass m für 2 steht, wenn E für N steht und der Maßgabe, dass m für 1 steht, wenn E für NH oder O steht;
A für CₓH₂ₓ mit x = 2, 3, 4 oder 5 oder CH₂CH(C₆H₅) steht;
b für eine ganze Zahl von 1 bis 300 steht;
M unabhängig voneinander für H oder ein Kationäquivalent stehen; 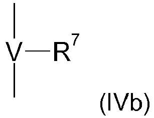 worin
V für einen substituierten oder unsubstituierten Phenylrest oder einen substituierten oder unsubstituierten Naphthylrest steht;
R⁷ für COOM, OCH₂COOM, SO₃M oder OPO₃M₂ steht;
M für H oder ein Kationäquivalent steht;
wobei die erwähnten Phenyl-, Naphthyl- oder heteroaromatischen Reste gegebenenfalls durch 1 oder zwei Reste substituiert sind, die ausgewählt sind unter R⁸, OH, OR⁸, (CO)R⁸, COOM, COOR⁸, SO₃R⁸ und NO₂; und
R⁸ für C₁-C₄-Alkyl, Phenyl, Naphthyl, Phenyl-C₁-C₄-alkyl oder C₁-C₄-Alkylphenyl steht.

2. Additiv nach Anspruch 1, wobei A¹ für NH₂ oder CH₃ steht.

3. Additiv nach Anspruch 1 oder 2, wobei Kⁿ⁺ für Na⁺, K⁺ oder Ca²⁺ steht.

4. Additiv nach einem der vorhergehenden Ansprüche, erhältlich durch Reaktion eines Calciumsalzes mindestens einer Sulfonsäureverbindung der Formel (I) mit wenigstens einer wasserlöslichen anorganischen Silikatverbindung in Gegenwart einer wässrigen Lösung des Dispergiermittels.

5. Additiv nach einem der vorhergehenden Ansprüche, wobei das polymere Dispergiermittel
i) Struktureinheiten der Formeln (la) und (IIa);
ii) Struktureinheiten der Formeln (Ic) und (IIa); oder
iii) Struktureinheiten der Formeln (Ia), (Ic) und (IIa)
aufweist.

6. Additiv nach einem der vorhergehenden Ansprüche, wobei das polymere Dispergiermittel aufgebaut ist aus Struktureinheiten (i) und (ii), die abgeleitet sind von (i) Acrylsäure, Methacrylsäure und/oder Maleinsäure und (ii) Vinyloxy-C₂-C₄-alkylen-polyethylenglykol, Allyloxy-polyethylenglykol, Methallyloxy-polyethylenglykol und/oder Isoprenyloxy-polyethylenglykol.

7. Additiv nach Anspruch 6, wobei das polymere Dispergiermittel aufgebaut ist aus Struktureinheiten (i) und (ii), die abgeleitet sind von
(i) Acrylsäure und Maleinsäure und (ii) Vinyloxy-C₂-C₄-alkylen-polyethylenglykol oder
(i) Acrylsäure und Maleinsäure und (ii) Isoprenyloxy-polyethylenglykol oder
(i) Acrylsäure und (ii) Vinyloxy-C₂-C₄-alkylen-polyethylenglykol oder
(i) Acrylsäure und (ii) Isoprenyloxy-polyethylenglykol oder
(i) Acrylsäure und (ii) Methallyloxy-polyethylenglykol oder
(i) Maleinsäure und (ii) Isoprenyloxy-polyethylenglykol oder
(i) Maleinsäure und (ii) Allyloxy-polyethylenglykol oder
(i) Maleinsäure und (ii) Methallyloxy-polyethylenglykol.

8. Additiv nach einem der vorhergehenden Ansprüche, das in Form einer Suspension oder in fester Form, insbesondere als Pulver, vorliegt.

9. Additiv nach einem der vorhergehenden Ansprüche, wobei das Molverhältnis von Calcium zu Silicium in den Calciumsilikathydratpartikeln 0,6 bis 2 bevorzugt 0,8 bis 1,8, besonders bevorzugt 0,9 bis 1,6, insbesondere bevorzugt 1,0 bis 1,5, beträgt.

10. Verfahren zur Herstellung eines Additivs nach einem der vorhergehenden Ansprüche, durch Reaktion mindestens einer Sulfonsäureverbindung der Formel (I), worin Kⁿ⁺ für Ca²⁺ steht, mit wenigstens einer wasserlöslichen anorganischen Silikatverbindung in Gegenwart einer wässrigen Lösung eines Dispergiermittels.

11. Verfahren nach Anspruch 10, das einen zusätzlichen Verfahrensschritt umfasst, bei dem die Härtungsbeschleunigerzusammensetzung getrocknet wird, wobei die Trocknung vorzugsweise durch Sprühtrocknung oder Walzentrocknung erfolgt.

12. Verwendung eines Additivs nach einem der Ansprüche 1 bis 9 in Baustoffmischungen, die ein hydraulisches Bindemittel enthalten.

13. Verwendung eines Additivs nach einem der Ansprüche 1 bis 9 als Zusatzstoff für hydraulische Bindemittel.

14. Verwendung eines Additivs nach einem der Ansprüche 1 bis 9 als Mahlhilfsmittel bei der Herstellung von (Portland)zement, Schlacke, Flugasche, Kalk, Puzzolane oder einer Mischung daraus, bevorzugt für (Portland)zement

15. Baustoffmischung, umfassend ein Additiv nach einem der Ansprüche 1 bis 9 und ein hydraulisches Bindemittel.

## Claims

1. Additive for hydraulically setting compositions, comprising
a) at least one polymeric dispersant comprising structural units having anionic or anionogenic groups and structural units having polyether side chains,
b) at least one sulfonic acid compound of the formula (I) 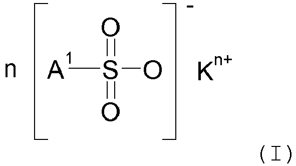 in which
A¹ is NH₂, NHMe, NMe₂, N(CH₂-CH₂-OH)₂, CH₃, C₂H₅, CH₂-CH₂-OH, phenyl, or p-CH₃-phenyl, and
Kⁿ⁺ is an alkali metal cation, or a cation selected from Ca²⁺, Mg²⁺, Sr²⁺, Ba²⁺, Zn²⁺, Fe²⁺, Fe³⁺, Al³⁺, Mn²⁺, or Cu²⁺, and
n is the value of the cation; and
c) calcium silicate hydrate particles,
wherein the polymeric dispersant as anionic or anionogenic group has at least one structural unit of the general formulae (Ia), (Ib), (Ic) and/or (Id) : 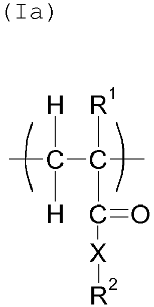 in which
R¹ is H or an unbranched or branched C₁-C₄ alkyl group, CH₂COOH, or CH₂CO-X-R³;
X is NH-(CₙH₂ₙ) or O-(CₙH₂ₙ) with n = 1, 2, 3, or 4, or is a chemical bond, the nitrogen atom or oxygen atom, respectively, being bonded to the CO group;
R² is OM, PO₃M₂, or O-PO₃M₂; with the proviso that X is a chemical bond if R² is OM;
R³ is PO₃M₂, or O-PO₃M₂; 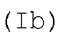 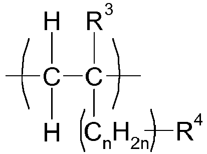 in which
R³ is H or an unbranched or branched C₁-C₄ alkyl group;
n is 0, 1, 2, 3, or 4;
R⁴ is PO₃M₂, or O-PO₃M₂; 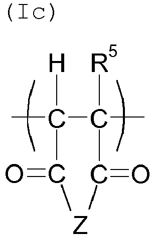 in which
R⁵ is H or an unbranched or branched C₁-C₄ alkyl group;
Z is 0 or NR⁷; and
R⁷ is H, (CₙH₂ₙ)-OH, (CₙH₂ₙ)-PO₃M₂, (CₙH₂ₙ)-OPO₃M₂, (C₆H₄)-PO₃M₂, or (C₆H₄)-OPO₃M₂;
n is 1, 2, 3, or 4; 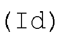 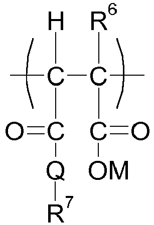 in which
R⁶ is H or an unbranched or branched C₁-C₄ alkyl group;
Q is NR⁷ or 0;
R⁷ is H, (CₙH₂ₙ) -OH, (CₙH₂ₙ)-PO₃M₂, (CₙH₂ₙ)-OPO₃M₂, (C₆H₄)-PO₃M₂, or (C₆H₄)-OPO₃M_{2;}
n is 1, 2, 3, or 4; and
each M independently of any other is H or one cation equivalent,
and as polyether side chain has at least one structural unit of the general formulae (IIa) and/or (IIb): 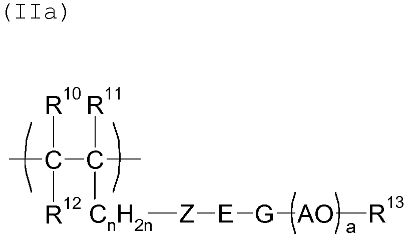 in which
R¹⁰, R¹¹, and R¹² independently of one another are H or an unbranched or branched C₁-C₄ alkyl group;
Z is 0 or S;
E is an unbranched or branched C₁-C₆ alkylene group, a cyclohexylene group, CH₂-C₆H₁₀, 1,2-phenylene, 1,3-phenylene, or 1,4-phenylene;
G is 0, NH, or CO-NH; or
E and G together are a chemical bond;
A is CₓH₂ₓ with x = 2, 3, 4, or 5, or CH₂CH(C₆H₅);
n is 0, 1, 2, 3, 4, and/or 5;
a is an integer from 2 to 350;
R¹³ is H, an unbranched or branched C₁-C₄ alkyl group, CO-NH₂ and/or COCH₃; 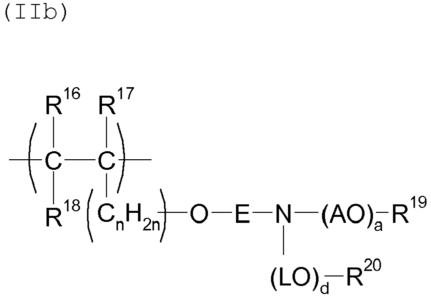 in which
R¹⁶, R¹⁷, and R¹⁸ independently of one another are H or an unbranched or branched C₁-C₄ alkyl group;
E is an unbranched or branched C₁-C₆ alkylene group, a cyclohexylene group, CH₂-C₆H₁₀, 1,2-phenylene, 1,3-phenylene, or 1,4-phenylene, or a chemical bond;
A is CₓH₂ₓ with x = 2, 3, 4, or 5, or CH₂CH(C₆H₅);
L is CₓH₂ₓ with x = 2, 3, 4, or 5, or CH₂-CH(C₆H₅);
a is an integer from 2 to 350;
d is an integer from 1 to 350;
R¹⁹ is H or an unbranched or branched C₁-C₄ alkyl group;
R²⁰ is H or an unbranched or branched C₁-C₄ alkyl group; and
n is 0, 1, 2, 3, 4, or 5; or
wherein the polymeric dispersant comprises at least one polymer which is a polycondensation product comprising structural units (III) and (IV) : 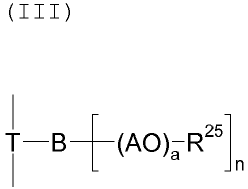 in which
T is a substituted or unsubstituted phenyl radical, a substituted or unsubstituted naphthyl radical or a substituted or unsubstituted heteroaromatic radical having 5 to 10 ring atoms, of which 1 or 2 atoms are heteroatoms selected from N, 0, and S;
n is 1 or 2;
B is N, NH, or 0, with the proviso that n is 2 if B is N and with the proviso that n is 1 if B is NH or 0;
A is CₓH₂ₓ with x = 2, 3, 4, or 5, or CH₂CH(C₆H₅);
a is an integer from 1 to 300;
R²⁵ is H, a branched or unbranched C₁ to C₁₀ alkyl radical, C₅ to C₈ cycloalkyl radical, aryl radical, or heteroaryl radical having 5 to 10 ring atoms, of which 1 or 2 atoms are heteroatoms selected from N, 0, and S;
the structural unit (IV) being selected from the structural units (IVa) and (IVb): 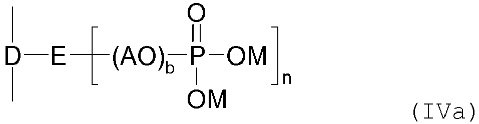 in which
D is a substituted or unsubstituted phenyl radical, a substituted or unsubstituted naphthyl radical or a substituted or unsubstituted heteroaromatic radical having 5 to 10 ring atoms, of which 1 or 2 atoms are heteroatoms selected from N, 0, and S;
E is N, NH, or 0, with the proviso that m is 2 if E is N and with the proviso that m is 1 if E is NH or 0;
A is CₓH₂ₓ with x = 2, 3, 4, or 5, or CH₂CH(C₆H₅);
b is an integer from 1 to 300;
M independently at each occurrence is H or one cation equivalent; 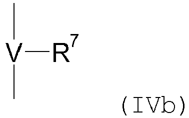 in which
V is a substituted or unsubstituted phenyl radical or a substituted or unsubstituted naphthyl radical;
R⁷ is COOM, OCH₂COOM, SO₃M, or OPO₃M₂;
M is H or one cation equivalent;
the phenyl, naphthyl or heteroaromatic radicals mentioned being optionally substituted by 1 or two radicals selected from R⁸, OH, OR⁸, (CO)R⁸, COOM, COOR⁸, SO₃R⁸, and NO₂; and
R⁸ is C₁-C₄ alkyl, phenyl, naphthyl, phenyl-C₁-C₄ alkyl, or C₁-C₄ alkylphenyl.

2. Additive according to Claim 1, wherein A¹ is NH₂ or CH₃.

3. Additive according to Claim 1 or 2, wherein Kⁿ⁺ is Na⁺, K⁺, or Ca²⁺.

4. Additive according to any of the preceding claims, obtainable by reaction of a calcium salt of at least one sulfonic acid compound of the formula (I) with at least one water-soluble inorganic silicate compound in the presence of an aqueous solution of the dispersant.

5. Additive according to any of the preceding claims, wherein the polymeric dispersant has
i) structural units of the formulae (Ia) and (IIa);
ii) structural units of the formulae (Ic) and (IIa); or
iii) structural units of the formulae (Ia), (Ic) and (IIa).

6. Additive according to any of the preceding claims, wherein the polymeric dispersant is composed of structural units (i) and (ii) derived from (i) acrylic acid, methacrylic acid and/or maleic acid and (ii) vinyloxy-C₂-C₄ alkylene-polyethylene glycol, allyloxy-polyethylene glycol, methallyloxy-polyethylene glycol and/or isoprenyloxy-polyethylene glycol.

7. Additive according to Claim 6, wherein the polymeric dispersant is composed of structural units (i) and (ii) derived from
(i) acrylic acid and maleic acid and (ii) vinyloxy-C₂-C₄ alkylene-polyethylene glycol or
(i) acrylic acid and maleic acid and (ii) isoprenyloxy-polyethylene glycol or
(i) acrylic acid and (ii) vinyloxy-C₂-C₄ alkylene-polyethylene glycol or
(i) acrylic acid and (ii) isoprenyloxy-polyethylene glycol or
(i) acrylic acid and (ii) methallyloxy-polyethylene glycol or
(i) maleic acid and (ii) isoprenyloxy-polyethylene glycol or
(i) maleic acid and (ii) allyloxy-polyethylene glycol or
(i) maleic acid and (ii) methallyloxy-polyethylene glycol.

8. Additive according to any of the preceding claims, in the form of a suspension or in solid form, more particularly as powder.

9. Additive according to any of the preceding claims, wherein the molar ratio of calcium to silicon in the calcium silicate hydrate particles is 0.6 to 2, preferably 0.8 to 1.8, more preferably 0.9 to 1.6, more particularly preferably 1.0 to 1.5.

10. Process for preparing an additive according to any of the preceding claims, by reacting at least one sulfonic acid compound of the formula (I) in which Kⁿ⁺ is Ca²⁺ with at least one water-soluble inorganic silicate compound in the presence of an aqueous solution of a dispersant.

11. Process according to Claim 10, comprising an additional process step of drying the hardening accelerator composition, the drying taking place preferably by spray drying or roll drying.

12. Use of an additive according to any of Claims 1 to 9 in building material mixtures which comprise a hydraulic binder.

13. Use of an additive according to any of Claims 1 to 9 as admixture for hydraulic binders.

14. Use of an additive according to any of Claims 1 to 9 as grinding assistant in the production of (portland) cement, slag, flyash, lime, pozzolans, or a mixture thereof, preferably for (portland) cement.

15. Building material mixture comprising an additive according to any of Claims 1 to 9 and a hydraulic binder.

## Revendications

1. Additif pour matériaux à durcissement hydraulique, comprenant
a) au moins un dispersant polymère, qui comprend des unités structurales contenant des groupes anioniques ou anionogènes et des unités structurales contenant des chaînes latérales polyéther,
b) au moins un composé d'acide sulfonique de formule (I) 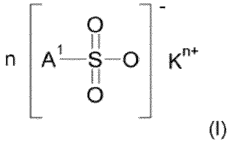 dans laquelle
A¹ représente NH₂, NHMe, NMe₂, N(CH₂-CH₂-OH)₂, CH₃, C₂H₅, CH₂-CH₂-OH, phényle ou p-CH₃-phényle, et
Kⁿ⁺ représente un cation de métal alcalin ou un cation choisi parmi Ca²⁺, Mg²⁺, Sr²⁺, Ba²⁺, Zn²⁺, Fe²⁺, Fe³⁺, Al³⁺,
Mn²⁺ ou Cu²⁺, et
n représente la valence du cation ; et
c) des particules d'hydrate de silicate de calcium dans lequel le dispersant polymère comprend en tant que groupe anionique ou anionogène au moins une unité structurale de formule générale (Ia), (Ib), (Ic) et/ou (Id): 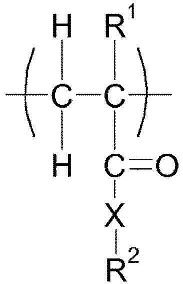 dans laquelle
R¹ représente H ou un groupe alkyle en C₁-C₄ non ramifié ou ramifié, CH₂COOH ou CH₂CO-X-R³ ;
X représente NH-(CₙH₂ₙ) ou O-(CₙH₂ₙ) avec n = 1, 2, 3 ou 4, ou une liaison chimique, l'atome d'azote ou l'atome d'oxygène étant relié au groupe CO ;
R² représente OM, PO₃M₂ ou O-PO₃M₂ ; à condition que X représente une liaison chimique lorsque R² représente OM ;
R³ représente PO₃M₂ ou O-PO₃M₂ ; 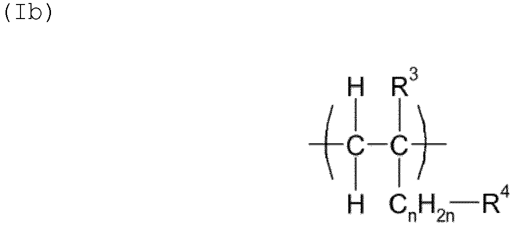 dans laquelle
R³ représente H ou un groupe alkyle en C₁-C₄ non ramifié ou ramifié ;
n représente 0, 1, 2, 3 ou 4 ;
R⁴ représente PO₃M₂ ou O-PO₃M₂ ; 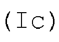 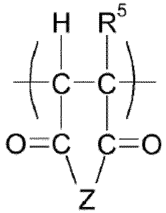 dans laquelle
R⁵ représente H ou un groupe alkyle en C₁-C₄ non ramifié ou ramifié ;
Z représente 0 ou NR⁷; et
R⁷ représente H, (CₙH₂ₙ) -OH, (CₙH₂ₙ)-PO₃M₂, (CₙH₂ₙ)-OPO₃M₂, (C₆H₄)-PO₃M₂ ou (C₆H₄)-OPO₃M₂,
n représente 1, 2, 3 ou 4 ; 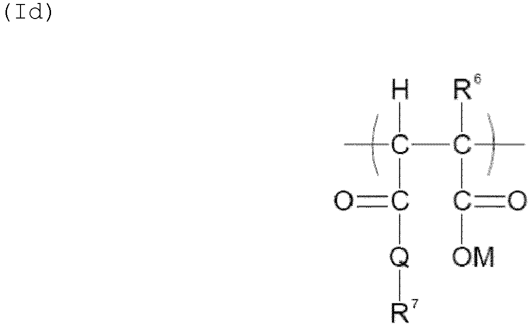 dans laquelle
R⁶ représente H ou un groupe alkyle en C₁-C₄ non ramifié ou ramifié ;
Q représente NR⁷ ou O ;
R⁷ représente H, (CₙH₂ₙ)-OH, (CₙH₂ₙ)-PO₃M₂, (CₙH₂ₙ) - OPO₃M₂, (C₆H₄)-PO₃M₂ ou (C₆H₄)-OPO₃M₂,
n 1, 2, 3 ou 4 ; et
chaque M représente indépendamment les uns des autres H ou un équivalent cationique,
et comprend en tant que chaîne latérale polyéther au moins une unité structurale de formule générale (IIa) et/ou (IIb) : 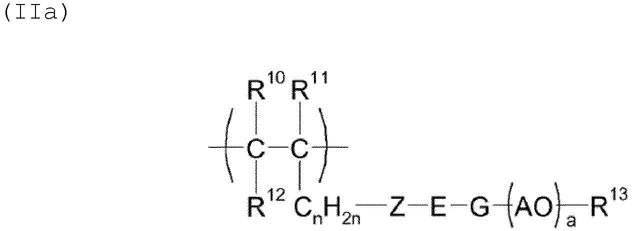 dans laquelle
R¹⁰, R¹¹ et R¹² représentent indépendamment les uns des autres H ou un groupe alkyle en C₁-C₄ non ramifié ou ramifié ;
Z représente 0 ou S ;
E représente un groupe alkylène en C₁-C₆ non ramifié ou ramifié, un groupe cyclohexylène, CH₂-C₆H₁₀, 1,2-phénylène, 1,3-phénylène ou 1,4-phénylène ;
G représente 0, NH ou CO-NH ; ou
E et G représentent ensemble une liaison chimique ;
A représente CₓH₂ₓ avec x = 2, 3, 4 ou 5, ou CH₂CH(C₆H₅) ;
n représente 0, 1, 2, 3, 4 et/ou 5 ;
a représente un nombre entier de 2 à 350 ;
R¹³ représente H, un groupe alkyle en C₁-C₄ non ramifié ou ramifié, CO-NH₂ et/ou COCH₃ ; 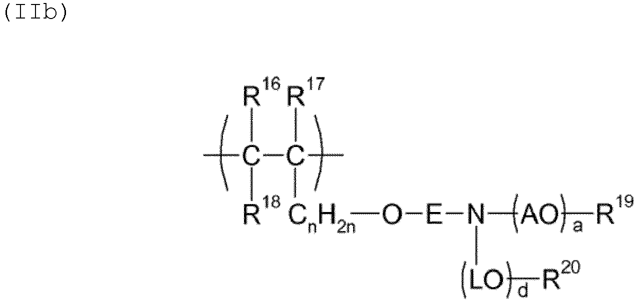 dans laquelle
R¹⁶, R¹⁷ et R¹⁸ représentent indépendamment les uns des autres H ou un groupe alkyle en C₁-C₄ non ramifié ou ramifié ;
E représente un groupe alkylène en C₁-C₆ non ramifié ou ramifié, un groupe cyclohexylène, CH₂-C₆H₁₀, 1,2-phénylène, 1,3-phénylène ou 1,4-phénylène, ou représente une liaison chimique ;
A représente CₓH₂ₓ avec x = 2, 3, 4 ou 5, ou CH₂CH(C₆H₅) ;
L représente CₓH₂ₓ avec x = 2, 3, 4 ou 5, ou CH₂-CH(C₆H₅) ;
a représente un nombre entier de 2 à 350 ;
d représente un nombre entier de 1 à 350 ;
R¹⁹ représente H ou un groupe alkyle en C₁-C₄ non ramifié ou ramifié ;
R²⁰ représente H ou un groupe alkyle en C₁-C₄ non ramifié ou ramifié ; et
n représente 0, 1, 2, 3, 4 ou 5 ; ou
dans lequel le dispersant polymère compred au moins un polymère qui est un produit de polycondensation qui comprend les unités structurales (III) et (IV) : 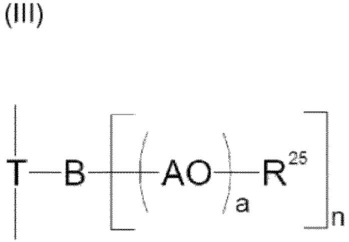 dans laquelle
T représente un radical phényle substitué ou non substitué, un radical naphtyle substitué ou non substitué ou un radical hétéroaromatique substitué ou non substitué comprenant 5 à 10 atomes de cycle, parmi lesquels 1 ou 2 atomes sont des hétéroatomes, qui sont choisis parmi N, 0 et S ;
n représente 1 ou 2 ;
B représente N, NH ou 0, à condition que n représente 2 lorsque B représente N, et à condition que n représente 1 lorsque B représente NH ou 0 ;
A représente CₓH₂ₓ avec x = 2, 3, 4 ou 5, ou CH₂CH(C₆H₅) ;
a représente un nombre entier de 1 à 300 ;
R²⁵ représente H, un radical alkyle en C₁-C₁₀ ramifié ou non ramifié, un radical cycloalkyle en C₅ à C₈, un radical aryle ou un radical hétéroaryle comprenant 5 à 10 atomes de cycle, parmi lesquels 1 ou 2 atomes sont des hétéroatomes, qui sont choisis parmi N, 0 et S ; l'unité structurale (IV) étant choisie parmi les unités structurales (IVa) et (IVb) : 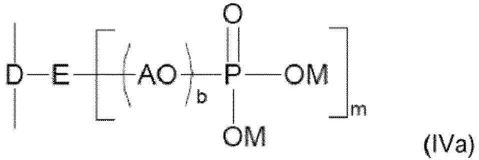 dans laquelle
D représente un radical phényle substitué ou non substitué, un radical naphtyle substitué ou non substitué ou un radical hétéroaromatique substitué ou non substitué comprenant 5 à 10 atomes de cycle, parmi lesquels 1 ou 2 atomes sont des hétéroatomes, qui sont choisis parmi N, 0 et S ;
E représente N, NH ou 0, à condition que m représente 2 lorsqu'E représente N, et à condition que m représente 1 lorsqu'E représente NH ou 0 ;
A représente CₓH₂ₓ avec x = 2, 3, 4 ou 5, ou CH₂CH(C₆H₅) ;
b représente un nombre entier de 1 à 300 ;
les M représentent indépendamment les uns des autres H ou un équivalent cationique ; 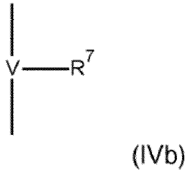 dans laquelle
V représente un radical phényle substitué ou non substitué ou un radical naphtyle substitué ou non substitué ;
R⁷ représente COOM, OCH₂COOM, SO₃M ou OPO₃M₂ ;
M représente H ou un équivalent cationique ;
les radicaux phényle, naphtyle ou hétéroaromatiques mentionnés étant éventuellement substitués par 1 ou deux radicaux qui sont choisis parmi R⁸, OH, OR⁸, (CO)R⁸, COOM, COOR⁸, SO₃R⁸ et NO₂ ; et
R⁸ représente alkyle en C₁-C₄, phényle, naphtyle, phényl-alkyle en C₁-C₄ ou alkylphényle en C₁-C₄.

2. Additif selon la revendication 1, dans lequel A¹ représente NH₂ ou CH₃.

3. Additif selon la revendication 1 ou 2, dans lequel Kⁿ⁺ représente Na⁺, K⁺ ou Ca²⁺.

4. Additif selon l'une quelconque des revendications précédentes, pouvant être obtenu par la réaction d'un sel de calcium d' au moins un composé d'acide sulfonique de formule (I) avec au moins un composé de silicate inorganique soluble dans l'eau en présence d'une solution aqueuse du dispersant.

5. Additif selon l'une quelconque des revendications précédentes, dans lequel le dispersant polymère comprend
i) des unités structurales des formules (Ia) et (IIa) ;
ii) des unités structurales des formules (Ic) et (IIa) ; ou
iii) des unités structurales des formules (Ia), (Ic) et (IIa).

6. Additif selon l'une quelconque des revendications précédentes, dans lequel le dispersant polymère est formé par des unités structurales (i) et (ii), qui sont dérivées de
(i) acide acrylique, acide méthacrylique et/ou acide maléique et (ii) vinyloxy-alkylène en C₂-C₄-polyéthylène glycol, allyloxy-polyéthylène glycol, méthallyloxy-polyéthylène glycol et/ou isoprényloxy-polyéthylène glycol.

7. Additif selon la revendication 6, dans lequel le dispersant polymère est formé par des unités structurales (i) et (ii), qui sont dérivées de (i) acide acrylique et acide maléique et (ii) vinyloxy-alkylène en C₂-C₄-polyéthylène glycol ou
(i) acide acrylique et acide maléique et (ii) isoprényloxy-polyéthylène glycol ou
(i) acide acrylique et (ii) vinyloxy-alkylène en C₂-C₄-polyéthylène glycol ou
(i) acide acrylique et (ii) isoprényloxy-polyéthylène glycol ou
(i) acide acrylique et (ii) méthallyloxy-polyéthylène glycol ou
(i) acide maléique et (ii) isoprényloxy-polyéthylène glycol ou
(i) acide maléique et (ii) allyloxy-polyéthylène glycol ou
(i) acide maléique et (ii) méthallyloxy-polyéthylène glycol.

8. Additif selon l'une quelconque des revendications précédentes, qui se présente sous la forme d'une suspension ou sous forme solide, notamment sous la forme d'une poudre.

9. Additif selon l'une quelconque des revendications précédentes, dans lequel le rapport molaire entre le calcium et le silicium dans les particules d'hydrate de silicate de calcium est de 0,6 à 2, de préférence de 0,8 à 1,8, de manière particulièrement préférée de 0,9 à 1,6, de manière notamment préférée de 1,0 à 1,5.

10. Procédé de fabrication d'un additif selon l'une quelconque des revendications précédentes, par réaction d'au moins un composé d'acide sulfonique de formule (I), dans laquelle Kⁿ⁺ représente Ca²⁺, avec au moins un composé de silicate inorganique soluble dans l'eau en présence d'une solution aqueuse d'un dispersant.

11. Procédé selon la revendication 10, qui comprend une étape de procédé supplémentaire, lors de laquelle la composition d'accélérateur de durcissement est séchée, le séchage ayant de préférence lieu par séchage par pulvérisation ou par séchage sur cylindre.

12. Utilisation d'un additif selon l'une quelconque des revendications 1 à 9 dans des mélanges de matériaux de construction qui contiennent un liant hydraulique.

13. Utilisation d'un additif selon l'une quelconque des revendications 1 à 9 en tant qu'additif pour liants hydrauliques.

14. Utilisation d'un additif selon l'une quelconque des revendications 1 à 9 en tant qu'adjuvant de broyage lors de la fabrication de ciment (Portland), de scories, de cendres volantes, de chaux, de pouzzolane ou d'un mélange de ceux-ci, de préférence pour le ciment (Portland).

15. Mélange de matériaux de construction, comprenant un additif selon l'une quelconque des revendications 1 à 9 et un liant hydraulique.
